# EUROPÄISCHE PATENTSCHRIFT

(11) **EP 2 475 922 B1**
(45) Veröffentlichungstag und Bekanntmachung des Hinweises auf die Patenterteilung: **22.07.2015**
(21) Anmeldenummer: 10741973.1
(22) Anmeldetag: 12.08.2010
(51) Int. Cl.: B21K 21/12, B21K 25/00, B21D 39/04, F16L 19/02, F16L 19/028, F16L 19/04, F16L 19/10

(54) **ROHRLEITUNG, ROHRVERSCHRAUBUNG UND VERFAHREN ZUR HERSTELLUNG DERSELBEN**
PIPE, SCREWED PIPE JOINT AND METHOD FOR THE PRODUCTION THEREOF
TUYAU, RACCORD VISSÉ ET PROCÉDÉ DE FABRICATION ASSOCIÉ

(30) Priorität: 10.09.2009 DE 102009041056
(43) Veröffentlichungstag der Anmeldung: 18.07.2012
(73) Patentinhaber: VOSS Fluid GmbH, 51688 Wipperfürth (DE)
(72) Erfinder: BERGHAUS, Gerd, 51515 Kürten (DE); POTT, Harald, 42499 Hückeswagen (DE)
(74) Vertreter: Patentanwälte Dr. Solf & Zapf
(86) Internationale Anmeldenummer: PCT/EP2010/061734
(87) Internationale Veröffentlichungsnummer: WO 2011/029687

(56) Entgegenhaltungen:
- DD-A1- 240 059
- DE-A1- 19 520 099
- DE-C1- 10 108 309
- DE-U1-202004 004 940
- FR-A1- 2 860 058
- GB-A- 1 117 987
- GB-A- 2 160 280
- US-A- 3 113 792
- US-B1- 6 260 401
- US-B1- 6 945 569

## Beschreibung

Die vorliegende Erfindung betrifft eine Rohrleitung und eine Rohrverschraubung zum Anschluss einer Rohrleitung, die einen nominellen Außenquerschnitt, einen nominellen Innenquerschnitt, eine nominelle Wandstärke sowie ein Anschlussende mit einem durch Umformung gebildeten Wandbereich aufweist, bestehend aus einem Anschlussteil und einem zum abgedichteten Halten der Rohrleitung mit dem Anschlussteil verschraubbaren Überwurf-Verschraubungsteil, wobei das Anschlussteil eine Aufnahmeöffnung mit einem sich in Richtung auf die Rohrleitung hin nach außen erweiternden Innenkonus aufweist, wobei der umgeformte Wandbereich des Anschlussendes der Rohrleitung formschlüssig und/oder kraftschlüssig zwischen dem Anschlussteil und dem Verschraubungsteil einspannbar ist und wobei das Anschlussende am Ende eines ersten Längenabschnittes, der sich von einer dem Anschlussteil zugewandten Stirnfläche in axialer Richtung erstreckt, ein durch die Außenmantelfläche des Anschlussendes gebildeter Außenquerschnitt der Rohrleitung größer als der nominelle Außenquerschnitt ist und in einem zweiten Längenabschnitt auf den Wert des nominellen Außenquerschnitts abnimmt.

Des Weiteren betrifft die Erfindung ein Verfahren zur Herstellung einer Rohrleitung insbesondere einer Rohrverschraubung der vorstehend beschriebenen Art, wobei ein Wandbereich eines Anschlussendes einer Rohrleitung einer Umformung unterworfen und bei Krafteinleitung in axialer Richtung der Rohrleitung in einer Form eines Werkzeugs eine Außenkontur des Anschlussendes ausgebildet wird.

Aus der internationalen Norm ISO 8434-1 sind Schraubverbindungen bekannt, die für das abdichtende Verbinden eines Rohres mit einem Rohrverbindungsteil oder Einschraubteil eingesetzt werden. In dieser Norm werden sogenannte 24E-Konus-Verbinder in verschiedenen Ausführungen beschrieben. Diese Verbindungen umfassen ein Anschlussteil und ein zum abgedichteten Halten der Rohrleitung mit dem Anschlussteil verschraubbares Überwurf-Verschraubungsteil, wobei das Anschlussteil eine Aufnahmeöffnung mit einem sich in Richtung auf die Rohrleitung hin nach außen erweiternden Innenkonus aufweist und wobei das Anschlussende der Rohrleitung formschlüssig und/oder kraftschlüssig zwischen dem Anschlussteil und dem Verschraubungsteil einspannbar ist. Die Winkelangabe 24° bezieht sich dabei auf den Öffnungswinkel des sich in Richtung auf die Rohrleitung hin nach außen erweiternden, insbesondere als kegelige Bohrung ausgeführten, Innenkonus des Anschlussteils.

Bei einer Art von Ausführungen gemäß der Norm ISO 8434-1 handelt es sich dabei um Schraubverbindungen, die jeweils unter Einsatz eines Schneidrings hergestellt werden. Ein solcher Schneidring ist bekanntermaßen ein auf dem Außenumfang der Rohrleitung sitzendes Ringteil, das die Rohrleitung an ihrem Anschlussende form- und kraftschlüssig zwischen dem Anschlussstutzen und dem Verschraubungsteil einspannt. Der Schneidring weist an seiner dem Anschlussteil zugewandten Seite einen Schneidenabschnitt mit mindestens einer Schneide auf, die sich bei Anzug des Verschraubungsteils unter der Wirkung der kegeligen Bohrung des Anschlussteils axial auf das Anschlussteil zuschiebt und gleichzeitig radial in die Wandung des zu verbindenden Rohres einschneidet. Das Anschlussende der Rohrleitung ist dabei - bis auf einen kleinen durch die Schneide deformierten Bereich - in seinem Querschnitt, insbesondere hinsichtlich seines Innen- und Außendurchmessers, genauso wie der übrige Rohrkörper ausgeführt, also durchmessergleich.

Schraubverbindungen mit verschiedenartig gestalteten Schneidringen sind auch aus der DE-AS 1 167 608, der DE-AS 1 175 639, der GB 1 117 987 A, der US 2 406 488 A und der EP 1 776 539 B1 bekannt und stellen in der Fluidtechnik seit langer Zeit einen Standard dar. Vorteile solcher Verbindungen bestehen dabei in niedrigen Systemkosten für die Verschraubungskomponenten und Maschinen, in den durch die bei der Herstellung der Verbindungen nur kurzen erforderlichen Mindestlängen bis zu einem Rohrbogen, welche eine kompakte Bauform ermöglichen, sowie in der Möglichkeit, eine Direktmontage in der Verschraubung ohne Einsatz von Montagemaschinen durchzuführen. Als nachteilig ist anzusehen, dass die sachgerechte Handhabung der Schneidringsysteme bei der Vor- und Endmontage Fachkenntnisse und Erfahrungen erfordert, dass die Qualität eines erzielten Vormontageergebnisses nur bedingt gut überprüfbar ist, dass die Schneidringe in hochfeste Stähle nur schwer einschneiden und dass sich nach einer Vormontage des Schneidrings zwischen dem Schneidring und dem Rohr durch elastische Auffederung des Rings oftmals Spalte einstellen, die dann bei der Endmontage geschlossen werden müssen.

Neben den vorstehend beschriebenen Schraubverbindungen sind des Weiteren aus der internationalen Norm ISO 8434-2 solche Schraubverbindungen bekannt, bei denen das Anschlussteil nicht einen sich in Richtung auf die Rohrleitung hin nach außen erweiternden Innenkonus, sondern einen sich nach innen verjüngenden Außenkonus aufweist. Insbesondere handelt es sich dabei in der ISO 8434-2 um gebördelte 37E-Konus-Verbinder, wobei die Rohrleitung mittels eines ringförmigen Manschettenteils mit ihrem nach außen gebördelten Anschlussende formschlüssig zwischen dem Anschlussteil und dem Verschraubungsteil einspannbar ist. Die Innenseite des gebördelten Rohrendbereichs liegt dabei an der komplementär ausgebildeten Außenseite des Außenkonus des Anschlussteils an. Die Winkelangabe bezieht sich dabei auf den

Öffnungswinkel des sich in Richtung auf die Rohrleitung hin nach innen verjüngenden Außenkonus des Anschlussteils. Dieses System wird auch als JIC-System bezeichnet. Während bei den 24E-Systemen nach der ISO 8434-1 eine axial eingeleitete Montagekraft zu einer etwa 4,8-fachen normal zur Konusebene wirkenden Einspann- und Dichtkraft verstärkt wird, wird bei den 37E-Systemen nach der ISO 8434-2 eine axial eingeleitete Montagekraft nur zu einer etwa 1,7-fachen normal zur Konusebene wirkenden Einspann- und Dichtkraft verstärkt. Im Vergleich mit 24E-Konus-Verbindern besitzen daher die 37E-Konus-Verbinder grundsätzliche Nachteile in Bezug auf Dichtheit und Montageverhalten.

Rohrverschraubungen zum Anschluss von vorgefertigten, jeweils in ihrem Anschlussende einen durch einen Stauch-Umformvorgang gebildeten Ringwulst aufweisenden Rohrleitungen sind in zahlreichen Ausführungen bekannt, und Vorrichtungen zu deren Herstellung werden üblicherweise als Rohrumformsysteme bezeichnet. Bei diesen Rohrleitungen nimmt ausgehend von einer dem Anschlussteil zugewandten Stirnfläche des Anschlussendes in einem ersten Längenabschnitt ein durch den umgeformten Wandbereich des Anschlussendes gebildeter Außenquerschnitt der Rohrleitung in axialer Richtung zu und ist dabei größer als der nominelle Außenquerschnitt und nimmt dann in einem zweiten Längenabschnitt in axialer Richtung wieder ab, bis er hinter dem Anschlussende den Wert des nominellen Außenquerschnitts erreicht. Die Querschnittsänderungen können dabei stetig oder auch sprunghaft erfolgen, wobei im letzteren Fall der zweite Längenabschnitt nahezu Null ist. Lediglich exemplarisch sei im Hinblick auf die Art und Herstellung derartiger Verschraubungen auf die Veröffentlichungen DE 195 20 099 C2, DE 195 26 316 C2 sowie EP 1 054 203 A1 hingewiesen.

Auf diese Weise ausgeführte Rohrverschraubungen weisen in der Regel große Bauhöhen auf, weil sie bei der Umformung des Anschlussendes für das Rohr lange gerade Einspannlängen bis zum Rohrbogen erfordern. In diesen Bereichen kann es nachteiligerweise durch das Einspannen auch - falls vorhanden - zur Beschädigung einer Korrosionsschutz-Beschichtung der Rohrleitung kommen. Des Weiteren sind die Umformmaschinen oft teuer, weil sie zur Erzeugung erheblich hoher Kräfte (z. B. 1000 kN bei einem Rohrdurchmesser von 42 mm) ausgelegt werden müssen.

Bei solchen Rohrverschraubungen besteht auch ein hauptsächlicher Nachteil darin, dass während der Montage durch Verschrauben des Verschraubungsteils (Überwurfmutter) das Rohr zum Mitdrehen neigt. Dieser Nachteil wird durch eine Rohrverschraubung überwunden, wie sie in der EP 1 260 750 B1 beschrieben ist. In dieser Verschraubung ist ein Stützring vorgesehen, wobei die Rohrleitung mit ihrem Ringwulst formschlüssig zwischen dem - im genannten Dokument als Anschlussstutzen bezeichneten - Anschlussteil und dem zwischen dem Ringwulst und dem Verschraubungsteil auf der Rohrleitung sitzenden Stützring einspannbar ist. Der Stützring bildet mit dem Ringwulst eine speziell gestaltete Anlagefläche aus, in deren Bereich beim Anziehen der Verschraubung im Wesentlichen keine radialen Kraftkomponenten auftreten.

Die genannten Rohrverschraubungen haben sich in der Praxis bewährt. In ihnen ist - zusätzlich zu dem Vorteil der möglichen Verwendbarkeit einer Weichdichtung am Rohrende - auch die Qualität der im Ergebnis der Vormontage erzeugten Wulstkontur einfach prüfbar, und es kann eine prozesssichere Endmontage erfolgen, die sich durch folgende vorteilhafte Merkmale auszeichnet:
- schon bei einem manuellen Anziehen des Verschraubungsteils erfolgt eine direkte Anlage von Rohr- und Stutzenkonus aneinander;
- die Montage kann mit niedrigen Anzugsmomenten bis zu einem Blockanschlag erfolgen;
- das System ist unkritisch gegen Über- und Untermontagen.

Zur Herstellung so oder ähnlich konturierter Rohrenden, die insbesondere im sich verjüngenden Längenbereich mit einer entsprechenden Wulstkontur versehen sind, ist eine Vorrichtung zum plastischen Verformen von Werkstücken einsetzbar, wie sie in der EP 1 494 827 B1 beschrieben ist. Eine solche Vorrichtung weist eine durch den Druck eines Fluids betätigte Umformeinheit und eine auf einer gemeinsamen Längsachse angeordnete, durch den Druck des Fluids, insbesondere hydraulisch, betätigte Vorspanneinheit sowie mittels der Vorspanneinheit spannbare Spannelemente auf. Dabei wird zur Umformung ein Werkzeugsatz benötigt, der neben den Spannelementen aus einem Stauchkopf gebildet ist, mittels dessen durch einen axialen Stauchprozess am Rohrende die Kontur gebildet wird. Es handelt sich somit um ein Verfahren der eingangs genannten Art.

Der vorliegenden Erfindung liegt die Aufgabe zugrunde, eine Rohrleitung und eine Rohrverschraubung der eingangs genannten Art sowie ein Verfahren zu deren Herstellung zu schaffen, die sich bei Gewährleistung einer hohen statischen und dynamischen Belastbarkeit der Rohrverschraubung durch reduzierte Bauhöhe und verbesserte Korrosionsbeständigkeit bzw. durch einen verringerten maschinellen Herstellungsaufwand auszeichnen und die die Nachteile des vorstehend beschriebenen Standes der Technik vermeiden. Erfindungsgemäß wird dies durch die Merkmale der unabhängigen Ansprüche 1 und 13 erreicht.

Solchermaßen kann in vorteilhafter Weise das Anschlussende der Rohrleitung für die erfindungsgemäße Rohrverschraubung ausgebildet werden, wobei die Form des Werkzeugs die Negativkontur zu der am Außenumfang der Wand des Anschlussendes anzuformenden, insbesondere konvexen, Kontur darstellt.

Im Verhältnis zu den vorstehend erwähnten bekannten Rohrverschraubungen unter Einsatz von Schneidringen zeichnet sich die erfindungsgemäße Rohrverschraubung durch ein deutlich verbessertes Montageverhalten aus. Die Qualität der erfindungsgemäß erzeugten Konuskontur des Anschlussendes der Rohrleitung ist einfach optisch prüfbar, bei der Montage zeigt das Auftreten eines überproportionalen Kraftanstiegs das Erreichen eines Blockanschlagpunkts an, und die Verbindung ist unempfindlich gegenüber Über- und Untermontagen.

Des Weiteren kann die erfindungsgemäße Rohrverschraubung problemlos für hochfeste Rohre, wie Edelstahlrohre, angewendet werden, wobei die den technologischen Aufwand für die Herstellung einer Verschraubung widerspiegelnden Kosten etwa auf dem gleichen Niveau liegen wie für die Herstellung einer Verschraubung mit Schneidring.

Verglichen mit den vorstehend erwähnten aus der ISO 8434-2 bekannten gebördelten 37E-Konus-Verbindern weist die erfindungsgemäße Rohrverschraubung höhere Einspann- und Dichtkräfte und niedrigere bei der Montage aufzuwendende Anzugsmomente auf. Dadurch wird die Gefahr, dass sich bei der Montage die Rohre mitdrehen, gesenkt.

Die erfindungsgemäße Rohrverschraubung zeigt ein ähnlich gutes Montageverhalten wie die vorstehend erwähnten Rohrverschraubungen, die mittels der bekannten Rohrumformsysteme herstellbar und insbesondere aus der EP 1 260 750 B1 bekannt sind, wobei aber für die Umformung nach dem erfindungsgemäßen Verfahren, bei der eine überwiegend radiale Stauchung erfolgt, nur Kräfte aufgewendet zu werden brauchen, die um bis zu 70 Prozent gegenüber dem bekannten Stauchverfahren mit überwiegend axialer Stauchung reduziert sind. Dies wird insbesondere dadurch möglich, dass bei der Umformung des Wandbereichs des Anschlussendes in dem Formpressprozess zur radialen Aufweitung, Stauchung und Konturierung ein auf einem kraftverstärkenden Prinzip beruhendes Konus-Werkzeug im Innenbereich des Rohres eingesetzt wird, wobei mit kleinen axialen Kräften sehr hohe radiale Kräfte erzeugt werden können. Eine Verkürzung der Rohrleitung bei der Umformung wird verfahrensbedingt nahezu vollständig vermieden. An der Kontaktstelle zwischen dem Konus des Werkzeugs und dem umzuformenden Rohrende können dabei insbesondere dann hohe Normalkräfte senkrecht zur Kontaktfläche übertragen werden, wenn ein Spitzenwinkel des Werkzeugs klein ist. Dadurch kann eine erhebliche Senkung der Maschinenkosten erreicht werden.

Darüber hinaus kann vorteilhafterweise bei der Umformung eine Einspannlänge der Rohrleitung derart klein gehalten werden, dass in einem Leitungssystem mit einer erfindungsgemäßen Rohrverschraubung deutlich kürzere gerade Rohrenden zwischen der Verschraubung und einem nächstliegenden Rohrbogen ausgeführt werden können, was zu deutlich reduzierten Bauhöhen führt. Während z. B. bei einer bekannten Umformmaschine bei einem Rohrdurchmesser von 42 mm die notwendige Einspannlänge bei etwa 60 mm liegt, kann diese Einspannlänge bei dem erfindungsgemäßen Verfahren kleiner als 20 mm und damit so gering gewählt werden, dass außerhalb der Verschraubung - also insbesondere außerhalb des Bereichs, der nach dem Verschrauben von dem Überwurf-Schraubteil abgedeckt wird - keine Spannbackenabdrücke des Werkzeugs liegen und daher auch später keine Korrosionsprobleme an der Rohrleitung auftreten.

Weitere vorteilhafte Ausgestaltungsmerkmale der Erfindung und dadurch erreichte Vorteile sind in den Unteransprüchen und der nachfolgenden Beschreibung enthalten.

Anhand von mehreren, in der Zeichnung veranschaulichten, bevorzugten Ausführungsbeispielen soll die Erfindung genauer erläutert werden. Dabei zeigen:
- Fig. 1: einen Axialschnitt durch eine erste Ausführungsform einer erfindungsgemäßen Rohrverschraubung im verschraubten Montagezustand,
- Fig. 2: einen Axialschnitt durch ein Anschlussende einer Rohrleitung der ersten Ausführungsform einer erfindungsgemäßen Rohrverschraubung - zusammen mit einer ersten Ausführung eines Werkzeugsatzes zur Realisierung des erfindungsgemäßen Verfahrens,
- Fig. 2a: einen Axialschnitt durch ein Anschlussende einer Rohrleitung der ersten Ausführungsform, vergrößert,
- Fig. 3: in dreidimensionaler Explosionsdarstellung, den in Fig. 2 dargestellten Werkzeugsatz,
- Fig. 4: einen Axialschnitt durch eine modifizierte erste Ausführungsform einer erfindungsgemäßen Rohrverschraubung im verschraubten Montagezustand,
- Fig. 5 bis 10: jeweils im Axialschnitt, verschiedene Prozessstufen des erfindungsgemäßen Verfahrens, dargestellt an einem Anschlussende einer Rohrleitung gemäß der ersten Ausführungsform einer erfindungsgemäßen Rohrverschraubung mit einem Werkzeugsatz gemäß der ersten Ausführung,
- Fig. 11: einen Axialschnitt durch ein Anschlussende einer Rohrleitung der ersten Ausführungsform einer erfindungsgemäßen Rohrverschraubung - zusammen mit einer zweiten Ausführung eines Werkzeugsatzes zur Realisierung des erfindungsgemäßen Verfahrens,
- Fig. 12: einen Axialschnitt durch ein Anschlussende einer Rohrleitung der ersten Ausführungsform einer erfindungsgemäßen Rohrverschraubung - zusammen mit einem Werkzeugsatz in einer dritten Ausführung,
- Fig. 13: einen Axialschnitt durch ein Anschlussende einer Rohrleitung der ersten Ausführungsform einer erfindungsgemäßen Rohrverschraubung - zusammen mit einem Werkzeugsatz in einer vierten Ausführung,
- Fig. 14: einen Axialschnitt durch ein Anschlussende einer Rohrleitung der ersten Ausführungsform einer erfindungsgemäßen Rohrverschraubung - zusammen mit einem Werkzeugsatz in einer fünften Ausführung,
- Fig. 15: einen Axialschnitt durch ein Anschlussende einer Rohrleitung der ersten Ausführungsform einer erfindungsgemäßen Rohrverschraubung - zusammen mit einem Werkzeugsatz in einer sechsten Ausführung,
- Fig. 16: in einer Darstellung wie in Fig. 1, jedoch verkleinert, einen Axialschnitt durch eine zweite Ausführungsform einer erfindungsgemäßen Rohrverschraubung im verschraubten Montagezustand,
- Fig. 17: in einer Darstellung wie in Fig. 2, jedoch verkleinert, einen Axialschnitt durch ein Anschlussende einer Rohrleitung der zweiten Ausführungsform einer erfindungsgemäßen Rohrverschraubung - zusammen mit einer siebenten Ausführung eines Werkzeugsatzes zur Realisierung des erfindungsgemäßen Verfahrens,
- Fig. 17a: einen Axialschnitt durch ein Anschlussende einer Rohrleitung der zweiten Ausführungsform, vergrößert,
- Fig. 18: in einer Darstellung wie in Fig. 16, einen Axialschnitt durch eine dritte Ausführungsform einer Rohrverschraubung im verschraubten Montagezustand,
- Fig. 19: in einer Darstellung wie in Fig. 17, einen Axialschnitt durch ein Anschlussende einer Rohrleitung der dritten Ausführungsform einer Rohrverschraubung - zusammen mit einem Werkzeugsatz in einer achten Ausführung,
- Fig. 20: in einer Darstellung wie in Fig. 16, einen Axialschnitt durch eine vierte Ausführungsform einer erfindungsgemäßen Rohrverschraubung im verschraubten Montagezustand,
- Fig. 21: in einer Darstellung wie in Fig. 17, einen Axialschnitt durch ein Anschlussende einer Rohrleitung der vierten Ausführungsform einer erfindungsgemäßen Rohrverschraubung - zusammen mit einem Werkzeugsatz in einer neunten Ausführung,
- Fig. 22 bis 28: jeweils im Axialschnitt, verschiedene Prozessstufen des erfindungsgemäßen Verfahrens, dargestellt an einem Anschlussende einer Rohrleitung gemäß der vierten Ausführungsform einer erfindungsgemäßen Rohrverschraubung mit einem Werkzeugsatz gemäß der neunten Ausführung,
- Fig. 29: in einer Darstellung wie in Fig. 20, einen Axialschnitt durch eine fünfte Ausführungsform einer erfindungsgemäßen Rohrverschraubung im verschraubten Montagezustand,
- Fig. 30: in einer Darstellung wie in Fig. 21, einen Axialschnitt durch ein Anschlussende einer Rohrleitung der fünften Ausführungsform einer erfindungsgemäßen Rohrverschraubung - zusammen mit einem Werkzeugsatz in einer zehnten Ausführung,
- Fig. 31: in dreidimensionaler Darstellung, eine Gegenhalteplatte des in Fig. 30 dargestellten Werkzeugsatzes.

In den verschiedenen Figuren der Zeichnung sind gleiche und einander entsprechende Teile stets mit denselben Bezugszeichen versehen und werden daher in der Regel auch jeweils nur einmal beschrieben.

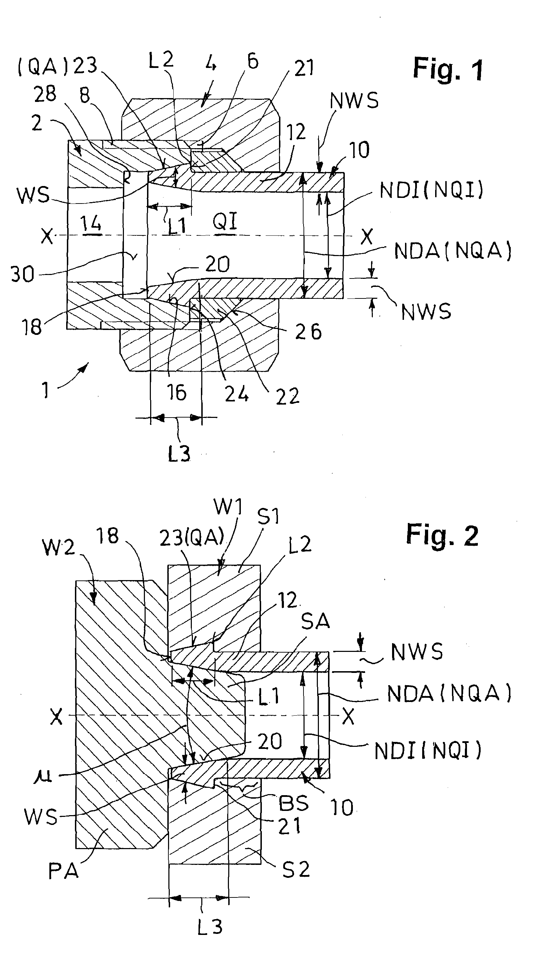

Wie sich zunächst aus Fig. 1 ergibt, besteht eine erfindungsgemäße Rohrverschraubung 1 aus einem Anschlussteil 2 in Form eines Anschlussstutzens und einem Überwurf-Verschraubungsteil 4, welches üblicherweise als Überwurfmutter ausgebildet ist, die mit einem Innengewinde 6 auf ein Außengewinde 8 des Anschlussteils 2 aufschraubbar ist. Eine anzuschließende, insbesondere metallische Rohrleitung 10 weist ein Anschlussende 12 auf, das in eine Aufnahmeöffnung 14 des Anschlussteils 2 einsetzbar ist. Die Aufnahmeöffnung 14 weist einen sich in Richtung auf die Rohrleitung 10 hin nach außen erweiternden Innenkonus 16 auf. Zum abgedichteten Halten der Rohrleitung 10 ist ein Wandbereich des Anschlussendes 12 der Rohrleitung 10 formschlüssig und/oder kraftschlüssig zwischen dem Anschlussteil 2 und dem Verschraubungsteil 4 einspannbar.

Die Rohrleitung 10 weist einen nominellen Innendurchmesser NDI und einen nominellen Außendurchmesser NDA auf. Diese für die Rohrleitung festen Größen bestimmen einen nominellen Innenquerschnitt NQI und einen nominellen Außenquerschnitt NQA sowie eine nominelle Wandstärke NWS und sind aus Gründen der Übersichtlichkeit nicht in allen Figuren eingezeichnet.

Ausgehend von einer dem Anschlussteil 2 zugewandten Stirnfläche 18 des Anschlussendes 12 der Rohrleitung 10 nimmt zunächst in einem ersten Längenabschnitt L1 ein durch die Außenmantelfläche des Anschlussendes 12 gebildeter Außenquerschnitt QA der Rohrleitung 10 in axialer Richtung X-X zu und ist dabei größer als der nominelle Außenquerschnitt NQA. In einem zweiten Längenabschnitt L2 nimmt der Außenquerschnitt QA in axialer Richtung X-X wieder ab, bis er hinter dem Anschlussende 12 den Wert des nominellen Außenquerschnitts NQA erreicht.

Ausgehend von der dem Anschlussteil 2 zugewandten Stirnfläche 18 ist ein lichter Innenquerschnitt QI der Rohrleitung 10 in einem dritten Längenabschnitt L3 des Anschlussendes 12 größer als der nominelle Innenquerschnitt NQI und nimmt in axialer Richtung X-X hin ab, bis er hinter dem Anschlussende 12 den Wert des nominellen Innenquerschnitts NQI erreicht.

An der Stirnfläche 18 ist dabei eine Wandstärke WS der Rohrleitung 10 kleiner als die nominelle Wandstärke NWS und verändert sich in axialer Richtung X-X hin bis auf den Wert der nominellen Wandstärke NWS hinter dem Anschlussende 12.

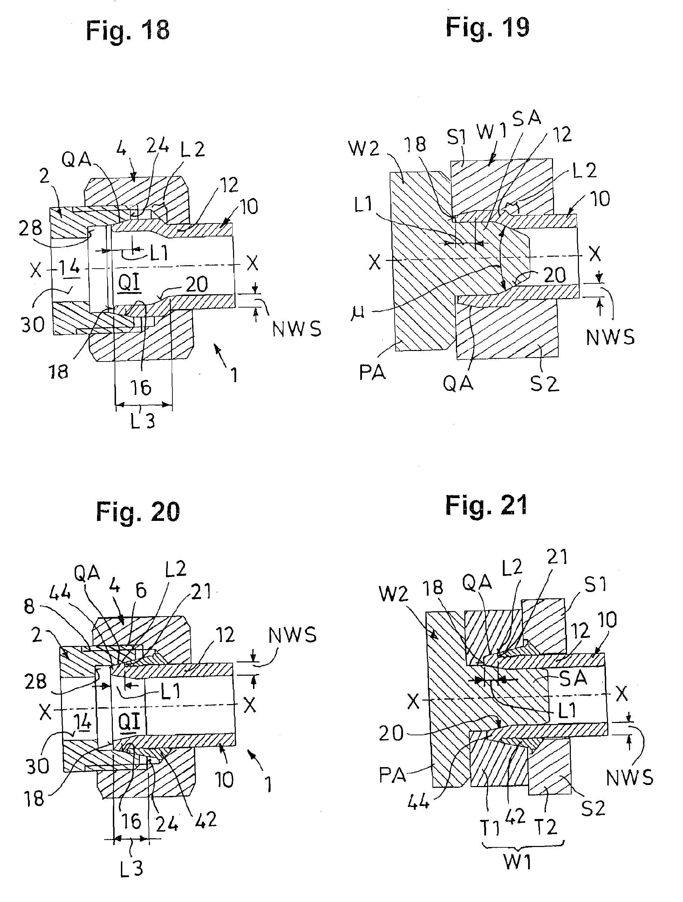

Diese Merkmale zeigt in unterschiedlicher Form jede Kontur des Anschlussendes 12 der in Fig. 1, 2a, 4, 16, 17a, 18, 20 und 29 dargestellten Ausführungsformen der Erfindung. Die Querschnittsaufweitungen und -verjüngungen können dabei stetig oder sprunghaft erfolgen. Insofern nimmt bei einer sprunghaften Änderung insbesondere des Außenquerschnitts QA (außer bei der Ausführung in Fig. 18 und 19) die Länge im zweiten Längenabschnitt L2 den Wert Null an. Für den ersten Längenabschnitt L1 ist bevorzugt, dass sich der durch den Wandbereich des Anschlussendes 12 gebildete Außenquerschnitt QA der Rohrleitung 10 komplementär, also im gleichen Winkel, zu dem sich in Richtung auf die Rohrleitung 10 hin nach außen erweiternden Innenkonus 16 des Anschlussteils 2 aufweitet.

Ebenso ist bevorzugt, dass sich ausgehend von der dem Anschlussteil 2 zugewandten Stirnfläche 18 des Anschlussendes 12 der Rohrleitung 10 der lichte Innenquerschnitt QI konisch verjüngt. Die Verjüngung ist in der Zeichnung mit dem Bezugszeichen 20 bezeichnet.

Wenn von der Stirnfläche 18 der Rohrleitung 10 ausgehend der lichte Innenquerschnitt QI der Rohrleitung 10 abnimmt, so wird insbesondere der kleinste Wert dieses Innenquerschnitts QI durch den nominellen Innendurchmesser NDI der Rohrleitung 10 bestimmt. Wenn der Außenquerschnitt QA der Rohrleitung 10 in dem zweiten Längenabschnitt L2 abnimmt, so wird insbesondere der kleinste Wert dieses Außenquerschnitts QA durch den nominellen Außendurchmesser NDA der Rohrleitung 10 bestimmt.

Der dritte Längenabschnitt L3 ist mindestens genauso groß wie die Summe aus dem ersten Längenabschnitt L1 und dem zweiten Längenabschnitt L2.

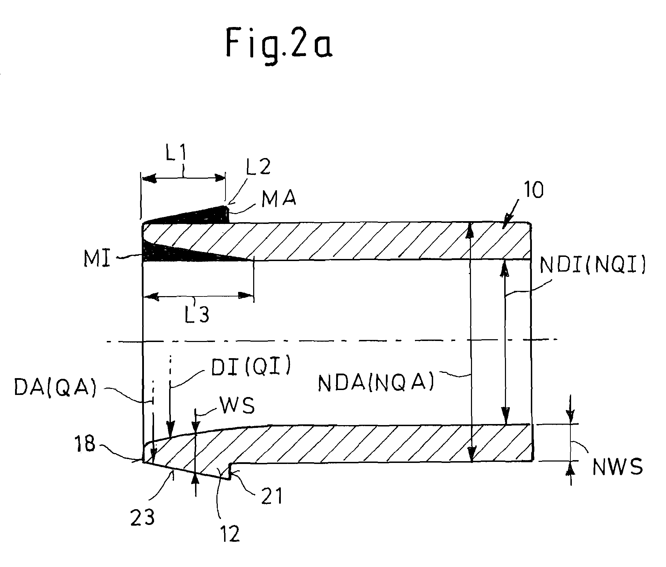

In der ersten Ausführung der erfindungsgemäßen Rohrverschraubung 1 ist die Kontur des Anschlussendes 12 - wie Fig. 1 und den anderen entsprechenden Zeichnungsfiguren, insbesondere deutlich der vergrößerten Darstellung in Fig. 2a, zu entnehmen ist-im Axialschnitt gesehen von der Grundgestalt her im Wesentlichen als ein gleichschenkliges Trapez ausgebildet, wobei die kürzere der beiden zueinander parallelen Seiten des Trapezes die Stirnfläche 18 des Anschlussendes 12 der Rohrleitung 10 bildet. Von der längeren der beiden zueinander parallelen Seiten des Trapezes liegt ein Teil in der Rohrwandung, während der andere Teil eine im Wesentlichen senkrecht zur Längsachse X-X ausgerichtete Ringfläche 21 um die Rohrleitung 10 herum bildet. Durch diese Ringfläche 21 nimmt in dem zweiten Längenabschnitt L2 der durch den Wandbereich des Anschlussendes 12 gebildete Außenquerschnitt QA der Rohrleitung 10 - und zwar sprunghaft - wieder ab, während der von der Stirnfläche 18 auf die Ringfläche 21 zulaufende radial außen liegende Schenkel 23 des Trapezes die in dem ersten Längenabschnitt L1 ausgebildete - insbesondere stetige - Zunahme des Außenquerschnitts QA repräsentiert.

Gemäß dem Verfahren der Erfindung wird - wie dies zunächst Fig. 2 zeigt - der Wandbereich des Anschlussendes 12 in einem Formpressprozess unter radialer Aufweitung des nominellen Innenquerschnitts NQI der Rohrleitung 10 durch eine schräg zur axialen Richtung X-X wirkende Kraft in eine Form F, insbesondere in eine Form F eines ersten Werkzeugteils W1, gepresst. Vorzugsweise wird dabei das Anschlussende 12 durch Kaltumformen hergestellt, so dass das Anschlussende 12 bevorzugt aus einem kaltumgeformten Metall, insbesondere aus kaltumgeformtem Stahl oder Edelstahl, besteht.

Die radiale Aufweitung 20 wird mittels eines - von der Stirnfläche 18 des Anschlussendes 12 ausgehend - axial in das Anschlussende 12 der Rohrleitung 10 bewegten, zweiten, stempelartigen umformenden Werkzeugteils W2 erzeugt, welches gleichzeitig das Material des umzuformenden Wandbereiches aus seiner Ursprungslage in die Form, bei der ersten Ausführung des Werkzeugsatzes insbesondere in die Form des ersten Werkzeugteils W1, drängt. Durch das bevorzugt konisch ausgebildete stempelartige Werkzeugteil W2 wird als radiale Aufweitung 20 insbesondere ein Innenkonus erzeugt, wobei durch die Werkzeugform, die durch schräg zur Längsachse X-X verlaufende Arbeitsflächen bestimmt ist, eine Kraftverstärkung erfolgt. Mit kleinen axialen Kräften können so sehr hohe radiale bzw. schräg zur Längsachse X-X wirkende Kräfte erzeugt werden. An der Kontaktstelle zwischen dem Konus des Werkzeugteils und dem umzuformenden Rohrende 12 werden dabei hohe Normalkräfte senkrecht zur Kontaktfläche zwischen Werkzeugteil W2 und Rohrende 12 übertragen.

Fig. 2a veranschaulicht dabei nochmals - und zwar ausschließlich am Rohrende 12-die sich durch das erfindungsgemäße Verfahren ausbildende Kombination wesentlicher Merkmale. Ausgehend von der Stirnfläche 18 des Anschlussendes 12 ist am Ende des ersten Längenabschnitts L1 der Außenquerschnitt QA der Rohrleitung 10 größer als der nominelle Außenquerschnitt NQA. Im in axialer Richtung X-X von der Stirnfäche aus gesehen dahinter liegenden zweiten Längenabschnitt L2 nimmt der Außenquerschnitt QA wieder ab und erreicht hinter dem Anschlussende 12 den Wert des nominellen Außenquerschnitts NQA. Der lichte Innenquerschnitt QI der Rohrleitung 10 ist an der Stirnfläche 18 im dritten Längenabschnitt L3 des Anschlussendes 12 größer als der nominelle Innenquerschnitt NQI und nimmt in axialer Richtung X-X ab. Hinter dem Anschlussende 12 erreicht er den Wert des nominellen Innenquerschnitts NQI. An der Stirnfläche 18 ist eine Wandstärke WS der Rohrleitung 10 kleiner als die nominelle Wandstärke NWS und verändert sich in axialer Richtung bis auf den Wert der nominellen Wandstärke NWS hinter dem Anschlussende 12.

Charakteristisch ist dabei des Weiteren, dass eine innere Materialdifferenz MI, die sich aus der Abweichung des Innenquerschnitts QI vom nominellen Innenquerschnitt NQI im dritten Längenabschnitt L3 ergibt, aufgrund der erfindungsgemäßen Umformung einer äußeren Materialdifferenz MA entspricht, die sich aus der Abweichung des Außenquerschnitts QA vom nominellen Außenquerschnitt NQA im ersten Längenabschnitt L1 und im zweiten Längenabschnitt L2 ergibt. Unter "entsprechen" wird dabei verstanden, dass die innere Materialdifferenz MI und die äußere Materialdifferenz MA vorzugsweise gleich groß sind und höchstens um 15 Prozent voneinander abweichen, wobei auch noch Maximalabweichungen von 30 Prozent zulässig sind. Die Materialdifferenzen MI, MA ergeben sich dabei jeweils aus dem Rotationsvolumen der in Fig. 2a schwarz gezeichneten, inneren und äußeren Flächen multipliziert mit der Dichte des Materials des Rohrendes 12.

Bei einer rein radialen Stauchung liegt der Fall vor, dass die innere Materialdifferenz MI und die äußere Materialdifferenz MA gleich groß sind. Wird stattdessen auch eine axiale Stauchung zugelassen, so entsteht die äußere Materialdifferenz MA anteilig auf Kosten einer Verkürzung der Länge der Rohrleitung 10.

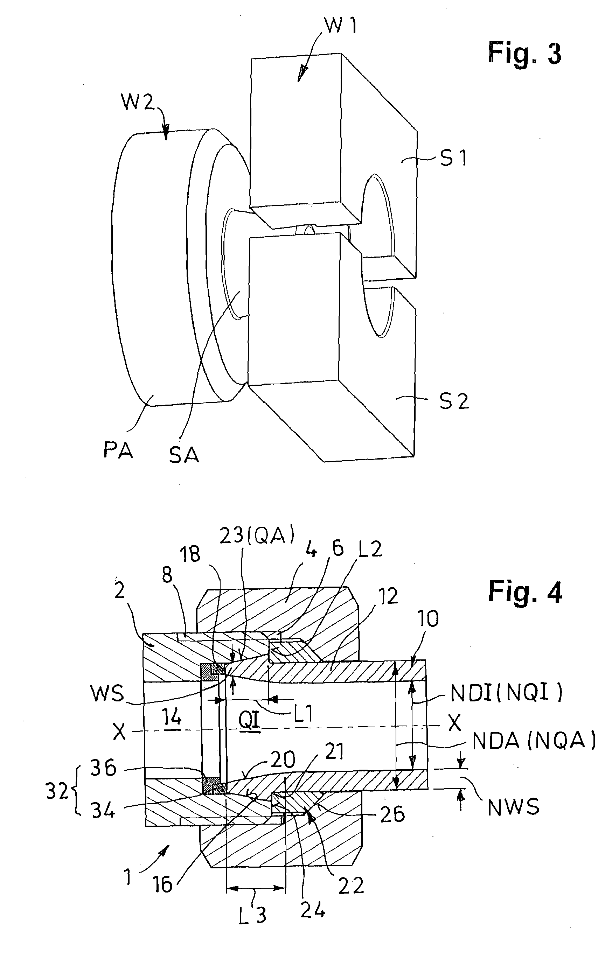

Die in Fig. 2 gezeigten Werkzeugteile W1, W2 sind - ohne Rohrleitung 10 - auch in Fig. 3 dargestellt. Hierbei wird aus der Darstellung beispielsweise deutlich, dass als erstes Werkzeugteil W1 zur Ausbildung eines Spannbereiches für die Rohrleitung 10 mindestens ein Spannelement eingesetzt werden kann, das vorzugsweise aus mehreren - im dargestellten Fall aus zwei - Segmenten S1, S2 gebildet ist, die bei der Umformung die Außenfläche der Rohrleitung 10 spaltfrei umschließen. In dem ersten Werkzeugteil W1 bilden die Bereiche zur Formgebung und die Bereiche mit dem Spannelement bzw. den Spannelementen eine bauliche Einheit.

Gemäß der ersten Ausführung der erfindungsgemäßen Rohrverschraubung 1 ist - wie auch bei der Mehrzahl der übrigen dargestellten Ausführungen - vorgesehen, dass in dem zweiten Längenabschnitt L2 ein die Rohrleitung 10 umschließendes Ringteil angeordnet ist, mittels dessen das Anschlussende 12 der Rohrleitung 10 formschlüssig und/oder kraftschlüssig zwischen dem Anschlussteil 2 und dem Verschraubungsteil 4 einspannbar ist. Bei der ersten Ausführung ist dieses Ringteil ein Stütz- bzw. Distanzring 22, der zwischen dem Verschraubungsteil 4 und der Kontur des Anschlussendes 12 auf einem achsparallelen Rohrabschnitt sitzt und mit der Kontur eine Anlagefläche - und zwar an der Ringfläche 21 - bildet. In dem in Fig. 1 dargestellten Montagezustand verläuft diese Ringfläche 21 fluchtend mit einer stirnseitigen Fläche 24 des Anschlussteils 2, an der der Distanzring 22 ebenfalls anliegt. Anderseitig ist am Distanzring 22 zur Überwurfmutter hin eine konusförmig verlaufende Anlagefläche 26 gebildet.

Das Anschlussteil 2 weist in seiner Aufnahmeöffnung 14 eine radiale Stufenfläche 28 auf, die je nach der Länge des in die Aufnahmeöffnung 14 ragenden Teils des Anschlussendes 12 der Rohrleitung 10 zur axialen Abstützung der Rohrleitung 10 durch Anlage der Stirnfläche 18 dienen kann oder von dieser Stirnfläche 18 beabstandet ist, wie dies Fig. 1 zeigt. So ist zwischen dem Innenkonus 16 und der Stufenfläche 28 innerhalb der Aufnahmeöffnung 14 des Anschlussteils 2 axial eine zylindrische innere Übergangsfläche 30 gebildet, die einen Innendurchmesser aufweist, der etwa dem kleinsten Außendurchmesser des Anschlussendes 12 entspricht.

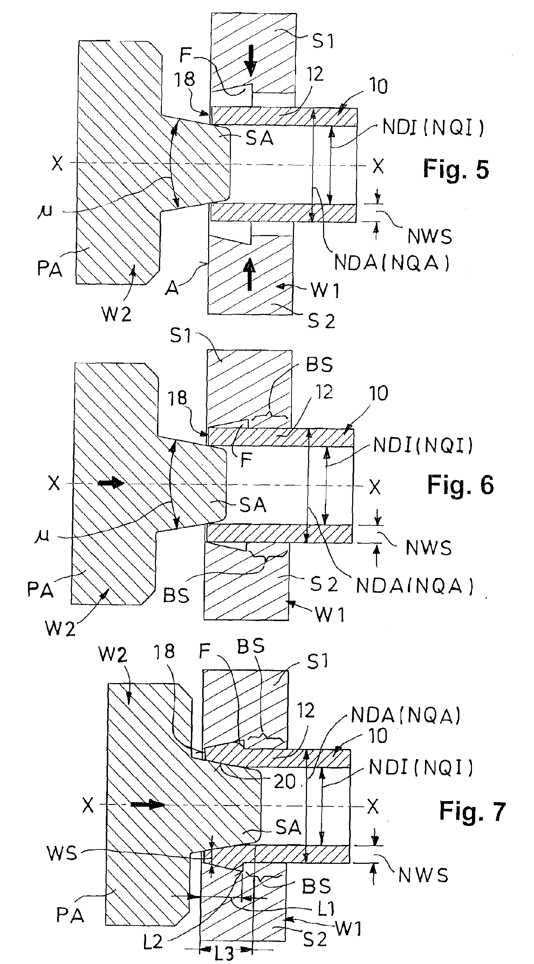

Auf der Stufenfläche 28 kann in dem von der zylindrischen inneren Übergangsfläche 30 überbrückten Raum - wie dies Fig. 4 zeigt - mit Vorteil eine Dichtung 32 positioniert werden. Die Dichtung 32 kann dabei - wie dargestellt - zweiteilig ausgebildet sein, indem sie aus einem elastomeren Dichtungsring 34 und aus einem dafür vorgesehenen Haltering 36 aus thermo- oder duroplastischem Kunststoff oder aus Metall besteht. Wie bereits erwähnt, veranschaulichen Fig. 5 bis 10 den Prozessablauf des erfindungsgemäßen Verfahrens.

Fig. 5 zeigt dabei zunächst die unter Bezug auf Fig. 3 bereits erwähnten Segmente S1, S2 des ersten Werkzeugteils W1, welches zugleich als Spannelement für die Rohrleitung 10 und als Formgebungselement für die am Anschlussende 12 auszubildende Kontur dient. Die Rohrleitung 10 befindet sich zwischen den Segmenten S1, S2.

Das zweite Werkzeugteil W2 ist rotationssymmetrisch zu einer Längsachse X-X ausgebildet und weist einen plattenartigen Abschnitt PA zur Einspannung in eine druckerzeugende Einrichtung und einen konischen Stempelabschnitt SA zur Verformung der Rohrleitung 10 auf. Der kleinste Durchmesser des konischen Stempelabschnittes SA ist kleiner als der nominelle Innendurchmesser NDI der Rohrleitung 10, so dass die Rohrleitung 10 problemlos auf das freie Ende des Stempelabschnitts SA aufgeschoben bzw. der Stempelabschnitt SA in die Rohrleitung 10 eingesteckt werden kann, wie dies Fig. 5 zeigt.

Ausgehend von diesem Zustand werden die Segmente S1, S2 des ersten Werkzeugteils W1 im Sinne der in Fig. 5 dargestellten Pfeile gegeneinander gefahren, so dass die Segmente S1, S2 die Außenfläche der Rohrleitung 10 spaltfrei umschließen. Das derart geschlossene erste Werkzeugteil W1 zeigt Fig. 6. Die Rohrleitung 10 wird dabei - insbesondere gegen eine axiale Verschiebung bei der nachfolgenden Umformung - in einem Spannbereich, der - von der Stirnfläche 18 des Anschlussendes 12 aus gesehen - hinter den umzuformenden Längenbereichen liegt, gegenüber dem ersten Werkzeugteil W1 kraft- und/oder formschlüssig fixiert.

Der Spannbereich ist in Fig. 6 bis 9 jeweils mit dem Bezugszeichen BS bezeichnet. Wie bereits erwähnt, kann dieser Spannbereich BS im Vergleich zu einer Umformung durch reine axiale Stauchung des Rohrendes optimal klein bzw. kurz gewählt werden - so klein, dass er in der erfindungsgemäßen Rohrverschraubung 1 vollständig von dem Verschraubungsteil 4 überdeckt wird.

Nachdem dieser Einspannungszustand des Rohres hergestellt ist, beginnt nun die radiale Aufweitung des Anschlussendes 12, indem der Stempelabschnitt SA des zweiten Werkzeugteils W2 axial weiter in das Anschlussende 12 der Rohrleitung 10 eingefahren wird. Dies wird durch den Pfeil in Fig. 6 angedeutet. Gleichzeitig wird durch das zweite Werkzeugteil W2 auch das Material des umzuformenden Wandbereiches aus seiner Ursprungslage in die Form des ersten Werkzeugteils W1 gedrängt. Die Form ist in Fig. 5 bis 7 und Fig. 10 mit dem Bezugszeichen F bezeichnet. Die Außenkonusform des Werkzeugteils W2 erzeugt dabei als radiale Aufweitung 20 eine Innenkonusform im Anschlusssende 12. Über die Kontaktfläche zwischen dem Außenkonus des Werkzeugteils W2 und dem sich ausbildenden Innenkonus des umzuformenden Rohrendes werden dabei insbesondere dann im Vergleich zu den in Richtung der Längsachse X-X eingeleiteten Axialkräften hohe, schräg zur Achse X-X, jedoch senkrecht zur Kontaktfläche wirkende Normalkräfte übertragen, wenn ein Spitzenwinkel µ des zweiten Werkzeugteils W2 im Bereich von 5° bis 60°, vorzugsweise im Bereich von 20° bis 40°, liegt.

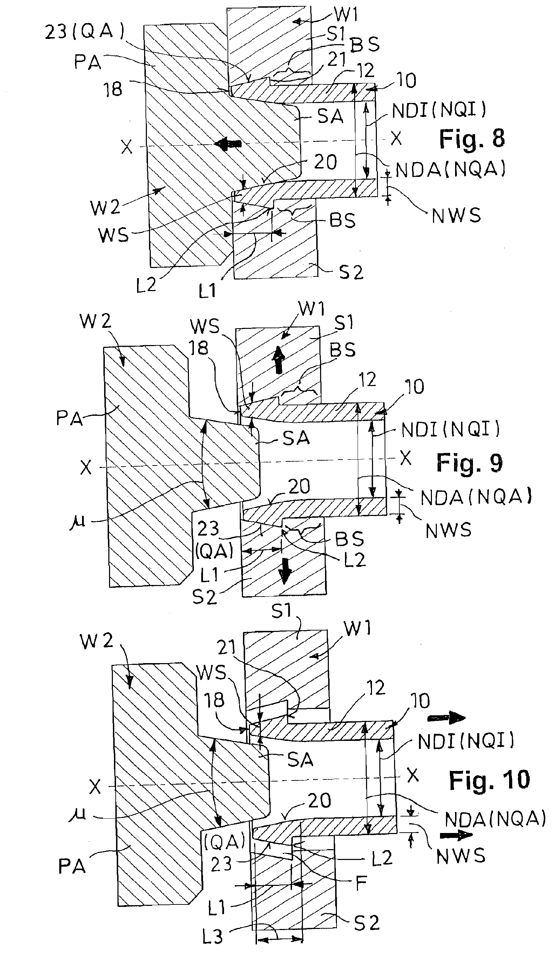

Fig. 7 zeigt einen ersten Zustand der Umformung und Fig. 8 den Endzustand der Umformung, bei der sich die erwünschte Kontur der Anschlussenden 12 vollständig ausgebildet hat. Der Winkel der Konusfläche der sich verjüngenden Innenkontur ist darin komplementär zu dem Spitzenwinkel µ des zweiten Werkzeugteils W2.

In Fig. 5 ist - bisher noch nicht erwähnt - dargestellt, dass die Stirnfläche 18 des Anschlussendes 12 nach der Aufnahme der Rohrleitung 10 mit einer Fläche A der Segmente S1, S2 fluchtet, die dem zweiten Werkzeugteil W2 zugewandt ist. Je nach der Relativlage der Stirnfläche 18 zur Fläche A der Segmente S1, S2 kann in den in Fig. 7 und 8 dargestellten Prozessschritten der Charakter des Umformungsvorganges bestimmt werden. Wenn die beiden Flächen 18, A fluchten oder die Stirnfläche 18 axial gegenüber der Fläche A der Segmente S1, S2 zurückspringt, bewirkt das zweite Werkzeugteil W2 die erfindungsgemäße Umformung sowohl unter radialer Aufweitung 20, als auch unter Stauchung, als auch unter Konturierung in der Form F. Die Stauchung hat dabei den Charakter einer rein radialen Stauchung. Wenn die Stirnfläche 18 allerdings nach dem Einspannen axial gegenüber der Fläche A der Segmente S1, S2 vorspringt, bewirkt das zweite Werkzeugteil W2 ebenfalls eine Umformung unter radialer Aufweitung 20, unter Stauchung und unter Konturierung in der Form F. Die Stauchung hat dabei aber neben der radialen Komponente der Stauchung auch eine axiale Komponente, deren Größe bedarfsweise durch den Überstand der Stirnfläche der Rohrleitung 10 gegenüber der Fläche A der Segmente S1, S2 festgelegt werden kann. Auf diese Weise können auch das Verhältnis der oben beschriebenen inneren Materialdifferenz MI und äußeren Materialdifferenz MA zueinander sowie die nach der Umformung vorliegende Wandstärke WS an der Stirnfläche 18 variiert werden.

Das zweite Werkzeugteil W2 kann nun in Richtung des Pfeiles in Fig. 8 wieder zurückverfahren werden, so dass es in die in Fig. 9 dargestellte Position gelangt. Danach werden die Segmente S1, S2 des ersten Werkzeugteils W1 in Richtung der in Fig. 9 dargestellten Pfeile geöffnet und als Endzustand liegt eine Anordnung gemäß Fig. 10 vor, in der die aus den Segmenten S1, S2 entformte Rohrleitung 10 aus dem Werkzeug entnommen werden kann.

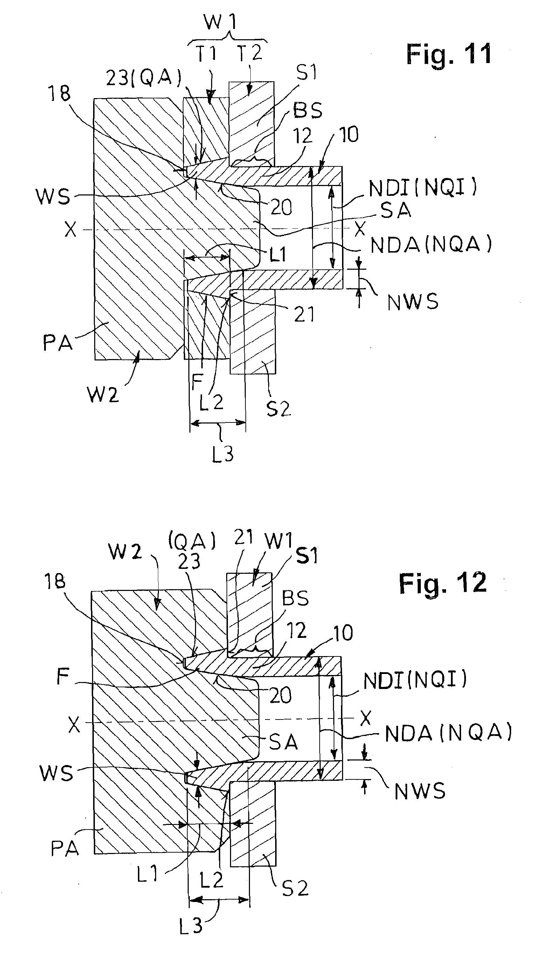

Fig. 11 bis 15 zeigen verschiedene Modifikationen des aus dem ersten Werkzeugteil W1 und dem zweiten Werkzeugteil W2 bestehenden Werkzeugsatzes zur Realisierung des erfindungsgemäßen Verfahrens. Dabei ist das Anschlussende 12 der Rohrleitung 10 immer in seiner ersten Ausführungsform dargestellt.

Bei der Ausführung des Werkzeugsatzes gemäß Fig. 11 ist das zweite Werkzeugteil W2 ebenso ausgebildet, wie dies vorstehend beschrieben wurde. Das erste Werkzeugteil W1 besteht jedoch hier aus zwei axial hintereinander angeordneten Teilstücken T1, T2. Diese Teilstücke T1, T2 bewirken - zumindest teilweise - eine Trennung der Formgebungsfunktion und der Spannfunktion. Das dem zweiten Werkzeugteil W2 zugewandte erste, formgebende Teilstück T1 ist dabei als vollständig geschlossener Ring ausgebildet, während das zweite, spannend wirkende Teilstück T2 wiederum aus Segmenten S1, S2 besteht. Die Form F wird hier einerseits aus einer konisch ausgebildeten Umfangsfläche im ersten Teilstück T1 gebildet. Dadurch entsteht in dem ersten Längenabschnitt L1 der außen liegende Schenkel 23 des Trapezes, also die stetige Zunahme des Außenquerschnitts QA. Andererseits wird die Form F durch axiale Anlage des zweiten Teilstücks T2 am rückseitig offenen ersten Teilstück T1 gebildet. Dadurch entsteht in dem zweiten Längenabschnitt L2 dann die den Querschnitt sprunghaft verringernde Ringfläche 21. Diese Ausbildung des Werkzeugsatzes weist den Vorteil auf, dass durch die geschlossene Ringform des ersten Teilstücks T1 bei der Umformung am Anschlussende 12 der Rohrleitung 10 in dem für die Dichtfunktion wichtigen Teilabschnitt 23 keine trennstellenbedingten Grate entstehen können. Durch ein radiales Öffnen der Segmente S1, S2 voneinander ist dabei jedoch immer eine problemlose Entformung des umgeformten Anschlussendes 12 aus dem Ringstück des ersten Werkzeugteils W1 möglich.

Zur Bewegung der Werkzeugteile W1, W2 ist bei entsprechender Umgestaltung der Werkzeuge im Außenbereich eine Vorrichtung einsetzbar, wie sie in der EP 1 494 827 B1 beschrieben ist.

Bei der Ausführung des Werkzeugsatzes gemäß Fig. 12 ist das zweite Werkzeugteil W2 derart ausgebildet, dass mit ihm einerseits - wie beschrieben - die radiale Aufweitung der Rohrleitung 10 erfolgt, andererseits aber auch in diesem Werkzeugteil W2 die Formgebung vor sich geht. Die Form F ist also hier überwiegend im zweiten Werkzeugteil W2 ausgebildet. Allerdings wird die Ringfläche 21 der Kontur des Anschlussendes 12 wiederum durch Anlage des ersten Werkzeugteils W1 gebildet, wie dies vorstehend für das zweite Teilstück T2 des ersten Werkzeugteils W1 beschrieben wurde. Diese Ausbildung des Werkzeugsatzes weist den Vorteil eines verringerten konstruktiven Werkzeugaufwands auf, allerdings muss dabei bei der Umformung der Tatsache Rechnung getragen werden, dass im zweiten Werkzeugteil W2 erhöhte Reibungskräfte auftreten, nämlich außen am Stempelabschnitt SA und innen im Plattenabschnitt PA. Dies erfordert höhere Kräfte und dementsprechend größere Einspannlängen bei der Umformung.

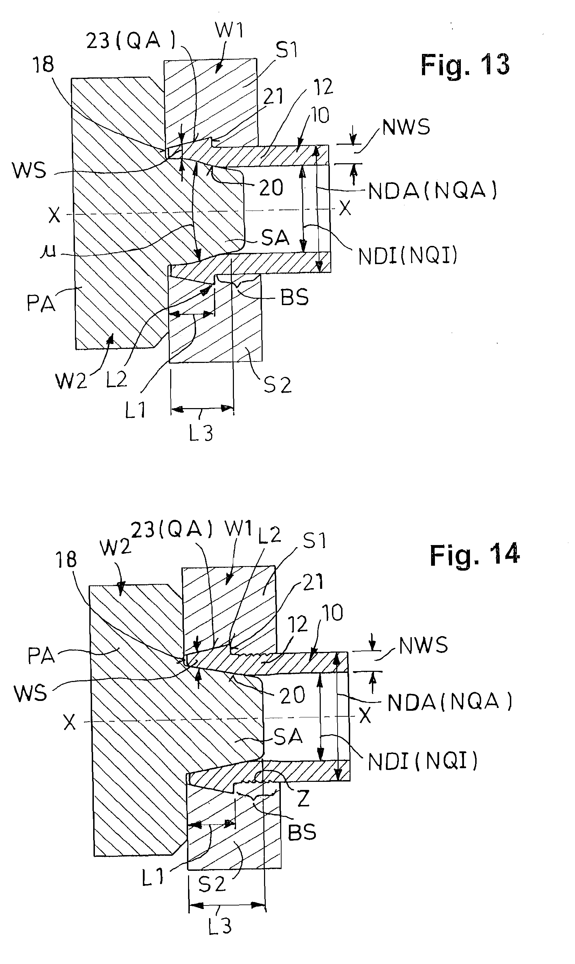

Die Ausführung des Werkzeugsatzes gemäß Fig. 13 entspricht derjenigen der Fig. 2 und 3 bzw. der Fig. 5 bis 10. Die Besonderheit liegt dabei darin, dass der Stempelabschnitt SA des zweiten Werkzeugteil W2 eine nicht rein kegelige, sondern eine wellenförmig ausgeführte Außenkontur aufweist. Dadurch kann mit Vorteil bei der Umformung an einer Stelle, an der die radiale Aufweitung 20 in den nominellen Innendurchmesser NDI der Rohrleitung 10 übergeht, eine größere Wandstärke WS beibehalten werden. Der Spitzenwinkel µ des zweiten Werkzeugteil W2 ist hier über die axiale Länge des Stempelabschnitts folglich veränderlich. Die vorstehenden Aussagen zum bevorzugten Größenbereich von 5° bis 60° und zum Optimalbereich von 20° bis 40° des Spitzenwinkels µ können bei dieser nichtlinear verlaufenden Kontur auf die Steigungswinkel von jeweils in jedem Punkt an die Kurve angelegten Tangenten übertragen werden.

Die Ausführung des Werkzeugsatzes gemäß Fig. 14 entspricht ebenfalls derjenigen der Fig. 2 und 3 bzw. der Fig. 5 bis 10. Die Spezifik dieser Ausführung besteht dabei darin, dass die zum Spannen dienenden Segmente S1, S2 des ersten Werkzeugteils W1 im Kontaktbereich mit der Rohrleitung 10, also im Spannbereich BS, Konturelemente, eine Verzahnung Z oder eine aufgerauhte Oberfläche aufweisen, die die Haltekräfte an der Rohrleitung 10 beim Umformprozess erhöhen.

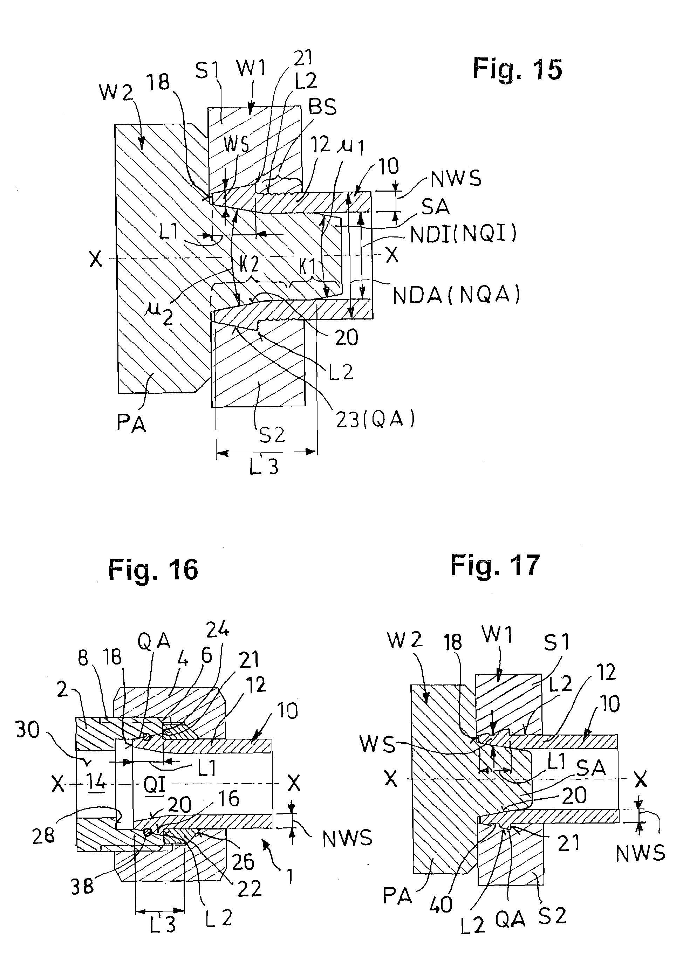

Bei der durch Fig. 15 veranschaulichten weiteren Ausführung eines Werkzeugsatzes weist das zweite Werkzeugteil W2 zwei konische bzw. sich radial aufweitende Abschnitte K1, K2 mit jeweils einem Spitzenwinkel µ1, µ2 auf. Der erste Abschnitt K1 presst zunächst die Rohrleitung 10 von innen in den Haltebereich der Spannbacken (Spannbereich BS), wonach dann der zweite Abschnitt K2 die radiale Aufweitung der Rohrleitung 10 bewirkt. Durch diese Ausführung werden vorteilhafterweise die Haltekräfte beim Umformen erhöht. Beide Spitzenwinkel µ1, µ2 können mit Vorteil wiederum im Bereich von 5° bis 60°, vorzugsweise im Bereich von 20° bis 40°, liegen.

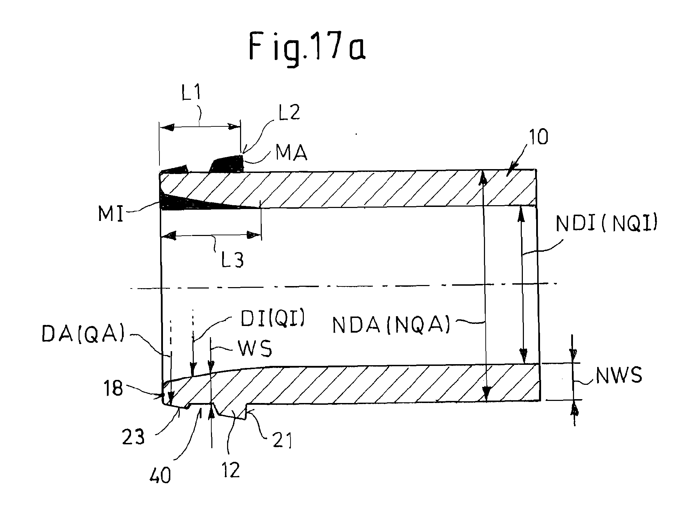

Durch das erfindungsgemäße Verfahren können die Anschlussenden 12 von Rohrleitungen 10 in verschiedenartigster Weise für die erfindungsgemäße Rohrverschraubung ausgebildet werden. So zeigen Fig. 16, 18, 20 und 29 weitere vorteilhafte Konturausbildungen von Anschlussenden 12 und die jeweils zugeordneten Fig. 17, 19, 21 sowie 30 die jeweiligen Werkzeugteile W1, W2 mit der entsprechenden Negativkontur.

Fig. 16, 17 und 17a beziehen sich auf eine Ausführung mit einer weiteren Kontur. Fig. 17a zeigt, dass - wie dies auch in Fig. 2a dargestellt ist - die innere Materialdifferenz MI und die äußere Materialdifferenz MA einander entsprechen. In Fig. 16 ist dabei eine O-Ring-Dichtung mit dem Bezugszeichen 38 und in Fig. 17 und 17a eine für sie vorgesehene Nut mit dem Bezugszeichen 40 bezeichnet. Das Vorhandensein der Nut 40 zeigt, dass in dem ersten Längenabschnitt L1 nicht zwangsläufig eine stetige Zunahme des Außenquerschnitts QA erfolgen muss, sondern dass es für eine form- und oder kraftschlüssige Einspannung nur notwendig ist, dass der Außenquerschnitt QA am Ende des ersten Längenabschnitts L1 größer ist als der nominelle Außenquerschnitt NQA. Bedingt durch den Hinterschnitt an der Nut 40 muss der formgebende erste Werkzeugteil W1 wiederum in mindestens zwei Segmente S1, S2 geteilt sein, damit eine Entformbarkeit des umgeformten Rohrendes gewährleistet ist. Das Anschlussende 12 der Rohrleitung 10 ist hinsichtlich seines Innendurchmessers nicht querschnittsgleich mit dem übrigen Rohrkörper ausgeführt, sondern ausgehend von der dem Anschlussteil 2 zugewandten Stirnfläche 18 nimmt der lichte Innenquerschnitt QI der Rohrleitung 10 in axialer Richtung ab.

Fig. 18 und 19 veranschaulichen eine Rohrverschraubung 1, in der kein zusätzliches Ringteil, wie ein Distanzring 22, zur formschlüssigen und/oder kraftschlüssigen Verspannung des Wandbereiches des Anschlussendes 12 der Rohrleitung 10 zwischen dem Anschlussteil 2 und dem Verschraubungsteil 4 erforderlich ist. Die Rohrleitung 10 kommt mit dem zweiten Längenabschnitt L2, in dem der durch den Wandbereich des Anschlussendes 12 gebildete Außenquerschnitt QA der Rohrleitung 10 in axialer Richtung wieder abnimmt, direkt zur Anlage am Verschraubungsteil 4.

In Fig. 20 und 21 sind eine Ausführungsform einer erfindungsgemäßen Rohrverschraubung 1 und der dazugehörige Werkzeugsatz dargestellt, bei denen in einem ersten Schritt ein Ringteil, insbesondere ein Schneidring 42, in die Wandung der Rohrleitung 10 einschneidet und das Rohr hierdurch axial fixiert, wobei dann in einem zweiten Schritt durch Innenaufweitung der sich von der Stirnfläche 18 wegweisend sich im ersten Längenabschnitt L1 erweiternde und sich im zweiten Längenabschnitt L2 verjüngende Außenquerschnitt QA sowie der sich verjüngende Innenquerschnitt QI geformt wird.

Im Vergleich zu den aus dem Stand der Technik bekannten Schneidring-Verbindungen sei hier auf den Vorteil hingewiesen, dass die im Längenabschnitt L1 an die Rohrleitung 10 angeformte Kontur unmittelbar an der Innenkonusfläche 16 des Anschlussteils 2 zur Anlage kommt, wodurch das oben erwähnte deutlich verbesserte Montageverhalten erzielt wird.

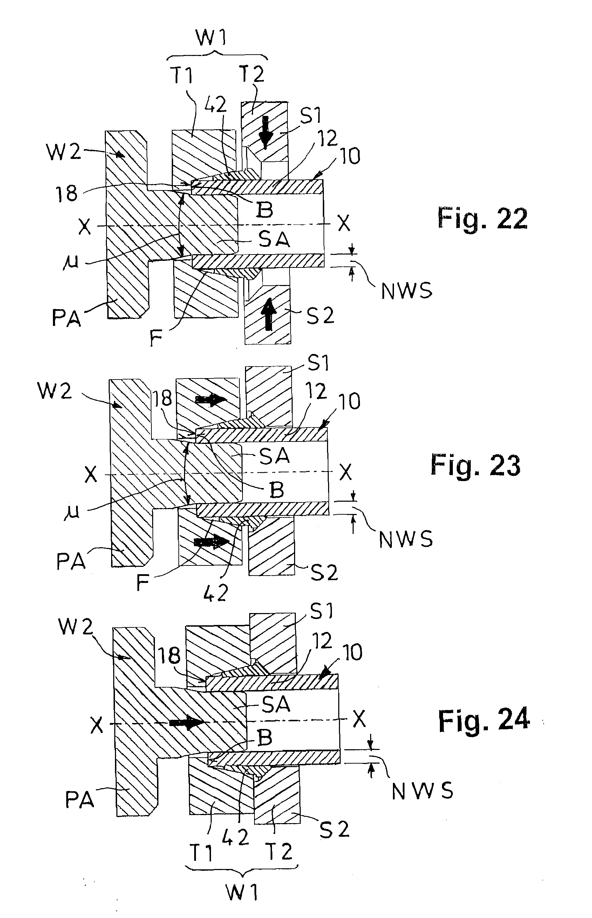

Ähnlich wie in Fig. 5 bis 10 für die erste Ausführung ist in Fig. 22 bis 28 für die Ausführungsform mit dem Schneidring 42 der Prozessablauf des erfindungsgemäßen Verfahrens dargestellt.

Zunächst zeigt Fig. 22 die Grundposition mit geöffneten Segmenten S1, S2 eines zweiten Teilstücks T2 des ersten Werkzeugteils W1. Die Rohrleitung 10 befindet sich zwischen den Segmenten S1, S2. Die Stirnfläche 18 des Anschlussendes 12 kommt an einem inneren Ringbund B eines dem zweiten Werkzeugteil W2 zugewandten, ersten Teilstücks T1 des ersten Werkzeugteils W1 zur Anlage. Dieses erste Teilstück weist durch eine konisch ausgebildete Innengestalt auch die Form F zur Ausbildung der Kontur am Anschlussende 12 auf. Die Rohrleitung 10 ist auf das freie Ende des Stempelabschnitts SA des zweiten Werkzeugteils W2 aufgeschoben bzw. der Stempelabschnitt SA in die Rohrleitung 10 eingesteckt. Der Schneidring 42 sitzt bereits auf der Rohrleitung 10.

Nun werden die Segmente S1, S2 des zweiten Teilstücks T2 des ersten Werkzeugteils W1 im Sinne der in Fig. 22 dargestellten Pfeile gegeneinander gefahren. Die Besonderheit dieser Ausführung besteht dabei darin, dass die Segmente S1, S2 keine echte Spannfunktion erfüllen. Sie stellen lediglich Halteplatten zur axialen Stützung dar. Die eigentliche Verspannung erfolgt mit dem Schneidring 42, so dass dieser vorteilhafterweise einerseits als Bauteil zur Ausbildung der erfindungsgemäßen Rohrverschraubung 1 und andererseits als Spannwerkzeug zu deren Herstellung dient. Das erste Werkzeugteil W1 wird somit aus seinen beiden Teilstücken T1, T2 und dem Schneidring 42 gebildet. Das geschlossene erste Werkzeugteil W1 zeigt Fig. 23.

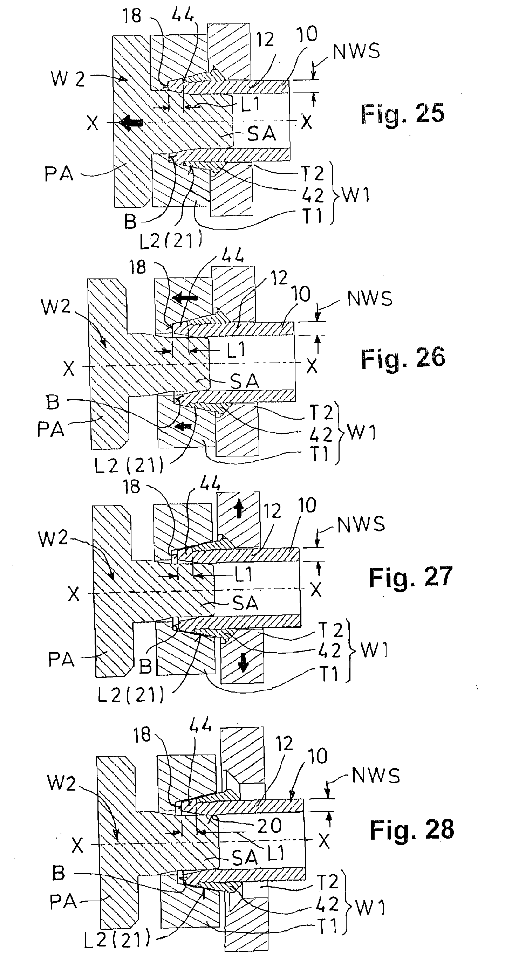

Nachfolgend werden das erste Teilstück T1 des ersten Werkzeugteils W1 im Sinne der Pfeile in Fig. 23 axial in Richtung auf das zweite Teilstück T2 des ersten Werkzeugteils W1 hin verfahren, so dass die beiden Teilstücke T1, T2 aneinander zur Anlage kommen. Dabei wird der Schneidring 42 auf die Rohrleitung 10 geformt, wie dies Fig. 24 zeigt. Nachdem dies geschehen ist, beginnt nun die radiale Aufweitung des Anschlussendes 12, indem der Stempelabschnitt SA des zweiten Werkzeugteils W2 axial weiter in das Anschlussende 12 der Rohrleitung 10 eingefahren wird. Dies wird durch den Pfeil in Fig. 24 angedeutet. Gleichzeitig wird durch das zweite Werkzeugteil W2 auch das Material des umzuformenden Wandbereiches aus seiner Ursprungslage in die Form F des ersten Teilstücks T1 des ersten Werkzeugteils W1 gedrängt. Dadurch wird der in Fig. 25 dargestellte Endzustand der Umformung erreicht, bei der sich die erwünschte Kontur am Anschlussende 12 vollständig ausgebildet hat.

Die in dem ersten Längenabschnitt L1 ausgebildete Zunahme des Außenquerschnitts QA wird dabei über eine in der Form F gebildete stirnseitige Nase 44 (siehe Fig. 21) gebildet. Hieran schließt sich axial die konisch verlaufende Außenseite des Schneidrings 42 an. Eine rückwärtige dem Schneidring 42 zugewandte Ringfläche 21 des Anschlussendes 12 bildet den Bereich, in dem im zweiten Längenabschnitt L2 der Außenquerschnitt QA der Rohrleitung 10 in axialer Richtung wieder abnimmt.

Das zweite Werkzeugteil W2 kann nun in Richtung des Pfeiles in Fig. 25 wieder axial zurückverfahren werden, so dass es in die in Fig. 26 dargestellte Position gelangt. Anschließend wird im Sinne der in Fig. 26 gezeigten Pfeile das erste Teilstück T1 des ersten Werkzeugteils W1 axial von dem zweiten Teilstück T2 des ersten Werkzeugteils W1 abgezogen, so dass die Rohrleitung 10 - wie in Fig. 27 dargestellt - entformt ist. Damit eine Entnahme derselben möglich ist, wie dies Fig. 28 zeigt, brauchen nunmehr nur noch die Segmente S1, S2 im Sinne der in Fig. 27 dargestellten Pfeile geöffnet werden.

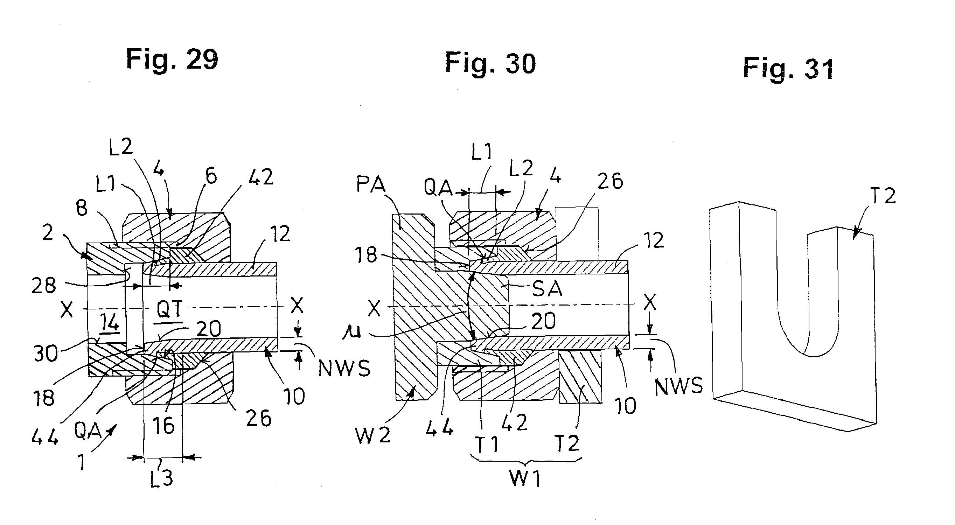

In Fig. 29 bis 31 sind eine Ausführungsform einer erfindungsgemäßen Rohrverschraubung 1 und der dazugehörige Werkzeugsatz dargestellt, bei der die Verschraubung nur geringfügig von der vorstehend beschriebenen abweicht. Unterschiedlich ist jedoch der verwendete Werkzeugsatz. Anstelle von mehreren, aus Segmenten S1, S2 bestehenden Halteplatten wird hier nur eine einzige, insbesondere mit einer U-förmigen Ausnehmung versehene Gegenhalteplatte als zweites Teilstück T2 des ersten Werkzeugs W1 eingesetzt. Diese erfüllt in Kombination mit dem Überwurf-Verschraubungsteil 4 die Funktion der axialen Fixierung des Schneidrings 42. Das erste Teilstück T1 des ersten Werkzeugteils W1 ist im Durchmesser derart reduziert, dass es in das Innere des Überwurf-Verschraubungsteil 4 passt.

Diese aus der Schneidring-Montage bekannte Technik führt im Hinblick auf die Erfindung zu folgendem zusätzlichen Vorteil: Dadurch, dass die Überwurfmutter bei dieser Ausführung im Bereich der Werkzeuge W1, W2 und nicht dahinter angeordnet ist, sind hinter der Verbindung noch kürzere gerade Rohrlängen realisierbar. So kann ein Rohrbogen beispielsweise unmittelbar hinter dem Überwurf-Verschraubungsteil 4 beginnen. Nach der sich an die Schneidringmontage anschließenden Innenaufweitung des Anschlussendes 12 der Rohrleitung 10 mittels der beiden Werkzeugteile W1, W2 kann dieses unmittelbar zur Abdichtung des Anschlussteils 2, beispielsweise eines genormten 24E-Konus-Verbindungsstutzens oder eines anderen Stutzenteils, eingesetzt werden.

Die Erfindung ist nicht auf die dargestellten und beschriebenen Ausführungsbeispiele beschränkt, sondern umfasst auch alle im Sinne der Erfindung gleichwirkenden Ausführungen, insbesondere Konturierungen des Anschlussendes 12 der Rohrleitung 10, die im Rahmen des Anspruchs 1 von den vorstehend dargestellten abweichen.

Auch der Ausbildung der Rohrleitung selbst wird erfinderische Bedeutung beigemessen.

Des Weiteren kann der Fachmann die Erfindung durch zweckmäßige technische Maßnahmen ergänzen, ohne dass der Rahmen der Erfindung verlassen wird. So entsprechen beispielsweise die Merkmale und die Anordnung des Distanzrings 22 bei der ersten Ausführung der erfindungsgemäßen Rohrverschraubung 1 derjenigen der eingangs erwähnten EP 1 260 750 B1.

Als Werkzeugteile W1, W2 sollten bei der Umformung insbesondere solche eingesetzt werden, deren Werkstoffe eine höhere Festigkeit aufweisen als der Werkstoff der Rohrleitung 10 und die insbesondere aus gehärtetem Werkzeugstahl bestehen. Im Sinne einer Senkung der aufzubringenden Arbeitskräfte kann die Oberfläche der Werkzeugteile W1, W2 - ausgenommen der Spannbereich BS - bevorzugt durch eine mechanische Behandlung, wie ein Polieren, oder durch das Vorhandensein einer Beschichtung derart ausgestaltet werden, dass bei der Umformung in der Reibpaarung mit der Rohrleitung 10 eine Reibungsminderung bewirkt wird.

### Bezugszeichenliste

- 1: Rohrverschraubung
- 2: Anschlussteil von 1
- 4: Überwurf-Verschraubungsteil von 1
- 6: Innengewinde in 4
- 8: Außengewinde auf 2
- 10: Rohrleitung in 1
- 12: Anschlussende von 10
- 14: Aufnahmeöffnung von 2 für 12
- 16: Innenkonus in 14
- 18: Stirnfläche von 10
- 20: Verjüngung in 10 (Innenkontur von 12)
- 21: Ringfläche (Außenkontur von 12)
- 22: Distanzring von 1 (Fig. 1, 4, 16)
- 23: Trapezschenkel (Außenkontur von 12)
- 24: stirnseitige Fläche an 2
- 26: Anlagefläche von 22 für 4
- 28: Stufenfläche in 14
- 30: Übergangsfläche zwischen 28 und 16
- 32: Dichtung (Fig. 4)
- 34: elastomerer Dichtungsring von 32
- 36: Haltering von 32
- 38: O-Ring-Dichtung in 40 (Fig. 16)
- 40: Nut für 38 (Außenkontur von 12, Fig. 17)
- 42: Schneidring (Fig. 20 bis 30)
- 44: Nase bei 18 (Fig. 20, 21, 29, 30)
- A: Fläche von S1, S2
- BS: Spannbereich für 10
- DA: Außendurchmesser von 10, 12
- DI: Innendurchmesser von 10, 12
- F: Form in W1, W1/W2
- K1: erster Konusabschnitt von W2 (Fig. 15)
- K2: zweiter Konusabschnitt von W2 (Fig. 15)
- L1: erster Längenabschnitt von 12
- L2: zweiter Längenabschnitt von 12
- L3: dritter Längenabschnitt von 12
- MA: äußere Materialdifferenz
- MI: innere Materialdifferenz
- NDA: nomineller Außendurchmesser von 10
- NDI: nomineller Innendurchmesser von 10
- NQA: nomineller Außenquerschnitt von 10, 12
- NQI: nomineller Innenquerschnitt von 10, 12
- NWS: nominelle Wandstärke von 10, 12
- PA: Plattenabschnitt von W2
- QA: Außenquerschnitt von 10, 12
- QI: Innenquerschnitt von 10, 12
- SA: Stempelabschnitt von W2
- S1: erstes Segment von W1 bzw. T2
- S2: zweites Segment von W1 bzw. T2
- T1: erstes Teilstück von W1
- T2: zweites Teilstück von W1
- W1: erster Werkzeugteil
- W2: zweiter Werkzeugteil
- WS: Wandstärke von 10, 12

- X-X: Längsachse von 1, W1, W2
- Z: Zahnung in BS

- µ, µ1, µ2: Spitzenwinkel, Konuswinkel von W2

## Patentansprüche

1. Verfahren zur Herstellung einer Rohrleitung (10),
wobei die Rohrleitung (10) einen nominellen Außenquerschnitt (NQA), einen nominellen Innenquerschnitt (NQI), eine nominelle Wandstärke (NWS) und ein Anschlussende (12) mit einem durch Umformung gebildeten Wandbereich aufweist, das in die Aufnahmeöffnung (14) eines Anschlussteils (2) einsetzbar ist,
wobei ein Wandbereich des Anschlussendes (12) einer Umformung unterworfen und bei Krafteinleitung in axialer Richtung (X-X) der Rohrleitung (10) in einer Form (F) eines Werkzeugs (W1, W2) eine Außenkontur des Anschlussendes (12) ausgebildet wird,
so dass am Ende eines ersten Längenabschnittes (L1) des Anschlussendes (12), der sich von einer Stirnfläche (18) der Rohrleitung (10) in axialer Richtung (X-X) erstreckt, ein durch die Außenmantelfläche des Anschlussendes (12) gebildeter Außenquerschnitt (QA) der Rohrleitung (10) größer als der nominelle Außenquerschnitt (NQA) ist,
und in einem zweiten Längenabschnitt (L2), der sich an den ersten Längenabschnitt (L1) in axialer Richtung anschließt, der Außenquerschnitt (QA) auf den Wert des nominellen Außenquerschnitts (NQA) abnimmt,
wobei - von der Stirnfläche (18) aus gesehen - in axialer Richtung (X-X) hinter dem zweiten Längenabschnitt (L2) in einem Spannbereich (BS), der - von einer Stirnfläche (18) des Anschlussendes (12) aus gesehen - in axialer Richtung hinter den Längenbereichen (L1, L2) liegt, die in dem durch Umformung gebildeten Wandbereich die Außenkontur bilden, ein die Rohrleitung (10) umschließendes Ringteil (22, 42) angeordnet wird, welches auf seiner der Stirnfläche (18) abgewandten Seite eine konusförmig verlaufende Anlagefläche (26) für ein mit der Rohrleitung (10) verschraubbares Verschraubungsteil (4) aufweist,
und dass der Wandbereich des Anschlussendes (12) unter radialer Aufweitung des nominellen Innenquerschnitts (NQI) der Rohrleitung (10) durch eine schräg zur axialen Richtung (X-X) wirkende Kraft in die Form (F) des Werkzeugs (W1, W2) gepresst wird,
so dass ausgehend von der dem Anschlussteil (2) zugewandten Stirnfläche (18) der lichte Innenquerschnitt (QI) der Rohrleitung (10) in einem dritten Längenabschnitt (L3) des Anschlussendes (12) größer als der nominelle Innenquerschnitt (NQI) ist und in axialer Richtung (X-X) hin abnimmt, bis er den Wert des nominellen Innenquerschnitts (NQI) erreicht,
wobei an der Stirnfläche (18) eine Wandstärke (WS) der Rohrleitung (10) kleiner ist als die nominelle Wandstärke (NWS) und sich in axialer Richtung (X-X) hin bis auf den Wert der nominellen Wandstärke (NWS) verändert, der hinter dem Anschlussende (12) vorliegt,
wobei der dritte Längenabschnitt (L3) mindestens genauso groß ist wie die Summe aus dem ersten Längenabschnitt (L1) und dem zweiten Längenabschnitt (L2),
und wobei die Rohrleitung (10) während der Umformung mittels des Ringteiles (22, 42) in axialer Richtung (X-X) fixiert wird.

2. Verfahren nach Anspruch 1,
**dadurch gekennzeichnet, dass** die Form (F) durch das Zusammenwirken eines ersten Werkzeugteils (W1) und eines zweiten Werkzeugteils (W2) ausgebildet wird.

3. Verfahren nach einem der Anspruch 1 oder 2,
**dadurch gekennzeichnet, dass** das Anschlussende (12) durch Kaltumformen hergestellt wird.

4. Verfahren nach einem der Ansprüche 1 bis 3,
**dadurch gekennzeichnet, dass** die Rohrleitung (10) bei der Umformung gegen eine axiale Verschiebung in dem Spannbereich (BS), der-von einer Stirnfläche (18) des Anschlussendes (12) aus gesehen - in axialer Richtung hinter den Längenbereichen (L1, L2) liegt, die in dem durch Umformung gebildeten Wandbereich die Außenkontur bilden - gegenüber dem ersten Werkzeugteil (W1) fixiert wird.

5. Verfahren nach Anspruch 4,
**dadurch gekennzeichnet, dass** die Rohrleitung (10) bei der Umformung in dem Spannbereich (BS) mittels eines Schneidrings (42) fixiert wird, der in der Rohrverschraubung (1) verbleibt.

6. Verfahren nach Anspruch 4 oder 5,
**dadurch gekennzeichnet, dass** zur Ausbildung des Spannbereiches (BS) als Spannelemente Segmente (S1, S2) eines Werkzeugteils (W1) eingesetzt werden, die eine Außenfläche der Rohrleitung (10) spaltfrei umschließen.

7. Verfahren nach Anspruch 6,
**dadurch gekennzeichnet, dass** die Segmente (S1, S2) im Kontaktbereich mit der Rohrleitung (10) Konturelemente, eine Verzahnung (Z) oder eine aufgerauhte Oberfläche aufweisen, die die Haltekräfte an der Rohrleitung (10) beim Umformprozess erhöhen.

8. Verfahren nach einem der Ansprüche 2 bis 7,
**dadurch gekennzeichnet,** dassdieradialeAufweitung(20) mittels des - von einer Stirnfläche (18) des Anschlussendes (12) ausgehend - axial in das Anschlussende (12) der Rohrleitung (10) bewegten stempelartigen zweiten Werkzeugteils (W2) erzeugt wird, welches gleichzeitig das Material des umzuformenden Wandbereiches aus seiner Ursprungslage in die Form (F) drängt.

9. Verfahren nach Anspruch 8,
**dadurch gekennzeichnet, dass** das zweite Werkzeugteil (W2) sich konisch verjüngend ausgebildet ist, wobei insbesondere ein Spitzenwinkel (µ) der konischen Verjüngung im Bereich von 5° bis 60°, vorzugsweise im Bereich von 20° bis 40°, liegt.

10. Verfahren nach einem der Ansprüche 2 bis 9,
**dadurch gekennzeichnet,** dassdasersteWerkzeugteil(W1) aus mehreren Teilstücken (T1, T2) besteht, durch deren Lösen voneinander eine Entformung des umgeformten Anschlussendes (12) aus dem ersten Werkzeugteil (W1) erfolgt.

11. Verfahren nach einem der Ansprüche 2 bis 10,
**dadurch gekennzeichnet,** dassalserstesWerkzeugteil(W1) oder zumindest als ein Teilstück (T1) im ersten Werkzeugteil (W1) ein umfangsgemäß geschlossener Ring eingesetzt wird.

12. Verfahren nach einem der Ansprüche 2 bis 11,
**dadurch gekennzeichnet, dass** bei der Umformung als Werkzeugteile (W1, W2) solche eingesetzt werden, deren Oberfläche - mit Ausnahme des Spannbereichs (BS) - durch eine mechanische Behandlung, wie ein Polieren, oder durch das Vorhandensein einer Beschichtung in der Reibpaarung mit der Rohrleitung (10) eine Reibungsminderung bei der Umformung bewirken.

13. Rohrleitung (10), hergestellt in einem Verfahren nach einem Ansprüche 1 bis 12,
zur Herstellung einer Rohrverschraubung (1), welche die Rohrleitung (10), ein Anschlussteil (2) und ein zum abgedichteten Halten der Rohrleitung (10) mit dem Anschlussteil (2) verschraubbares Überwurf-Verschraubungsteil (4) umfasst,
wobei das Anschlussteil (2) eine Aufnahmeöffnung (14) mit einem sich in axialer Richtung (X-X) auf die Rohrleitung (10) hin nach außen erweiternden Innenkonus (16) zur Aufnahme eines Anschlussendes (12) der Rohrleitung (10) aufweist,
wobei die Rohrleitung (10) einen nominellen Außenquerschnitt (NQA), einen nominellen Innenquerschnitt (NQI), eine nominelle Wandstärke (NWS) sowie ein Anschlussende (12) mit einem durch Umformung gebildeten Wandbereich aufweist, das in die Aufnahmeöffnung (14) des Anschlussteils (2) einsetzbar ist,
wobei am Ende eines ersten Längenabschnittes (L1) des Anschlussendes (12), der sich von einer Stirnfläche (18) der Rohrleitung (10) in axialer Richtung (X-X) erstreckt, ein durch die Außenmantelfläche des Anschlussendes (12) gebildeter Außenquerschnitt (QA) der Rohrleitung (10) größer als der nominelle Außenquerschnitt (NQA) ist,
und in einem zweiten Längenabschnitt (L2), der sich an den ersten Längenabschnitt (L1) in axialer Richtung anschließt, der Außenquerschnitt (QA) auf den Wert des nominellen Außenquerschnitts (NQA) abnimmt,
wobei der Wandbereich des Anschlussendes (12) der Rohrleitung (10) durch Pressen in eine Form (F) eines Werkzeugs (W1, W2) bei einer Krafteinleitung schräg zur axialen Richtung (X-X) unter radialer Aufweitung seines nominellen Innenquerschnitts (NQI) geformt ist,
so dass ausgehend von der dem Anschlussteil (2) zugewandten Stirnfläche (18) der lichte Innenquerschnitt (QI) der Rohrleitung (10) in einem dritten Längenabschnitt (L3) des Anschlussendes (12) größer als der nominelle Innenquerschnitt (NQI) ist und in axialer Richtung (X-X) hin abnimmt, bis er den Wert des nominellen Innenquerschnitts (NQI) erreicht, der hinter dem Anschlussende (12) vorliegt, und an der Stirnfläche (18) eine Wandstärke (WS) der Rohrleitung (10) kleiner ist als die nominelle Wandstärke (NWS) und sich in axialer Richtung (X-X) hin bis auf den Wert der nominellen Wandstärke (NWS) verändert, die hinter dem Anschlussende (12) vorliegt,
wobei der dritte Längenabschnitt (L3) mindestens genauso groß ist wie die Summe aus dem ersten Längenabschnitt (L1) und dem zweiten Längenabschnitt (L2), und
wobei von der Stirnfläche (18) aus gesehen - in axialer Richtung (X-X) hinter dem zweiten Längenabschnitt (L2) in einem Spannbereich (BS), der - von einer Stirnfläche (18) des Anschlussendes (12) aus gesehen - in axialer Richtung hinter den Längenbereichen (L1, L2), die in dem durch Umformung gebildeten Wandbereich die Außenkontur bilden, liegt, ein die Rohrleitung (10) umschließendes Ringteil (22, 42) angeordnet ist,
mittels dessen das Anschlussende (12) der Rohrleitung (10) formschlüssig und/oder kraftschlüssig zwischen dem Anschlussteil (2) und dem Verschraubungsteil (4) einspannbar ist,
wobei das Ringteil (22, 42) auf seiner der Stirnfläche (18) abgewandten Seite eine konusförmig verlaufende Anlagefläche (26) für das Verschraubungsteil (4) aufweist.

14. Rohrleitung (10) nach Anspruch 13,
**dadurch gekennzeichnet, dass** ein Spitzenwinkel (µ) der konischen Verjüngung des lichten Innenquerschnitts (QI) im Bereich vom 5° bis 60°, vorzugsweise im Bereich von 20° bis 40°, liegt oder sich in diesem Bereich im dritten Längenabschnitt (L3) verändert.

15. Rohrleitung (10) nach Anspruch 13 oder 14,
**dadurch gekennzeichnet, dass** das Anschlussende (12) aus einem kaltumgeformten Metall, insbesondere aus kaltumgeformtem Stahl oder Edelstahl, besteht.

16. Rohrleitung (10) nach einem der Ansprüche 13 bis 15,
**dadurch gekennzeichnet,** dassdasAnschlussende(12)im Axialschnitt gesehen von der Grundgestalt her als ein gleichschenkliges Trapez ausgebildet ist, wobei die kürzere der beiden zueinander parallelen Seiten des Trapezes die Stirnfläche (18) des Anschlussendes (12) der Rohrleitung (10) und ein Teil der längeren der beiden zueinander parallelen Seiten des Trapezes eine im Wesentlichen senkrecht zur Längsachse (X-X) ausgerichtete Ringfläche (21) um die Rohrleitung (10) herum bildet, wobei durch einen von der Stirnfläche (18) auf die Ringfläche (21) zulaufenden radial außen liegenden Schenkel (23) des Trapezes die in dem ersten Längenabschnitt (L1) ausgebildete Zunahme des Außenquerschnitts (QA) und durch den anderen Schenkel die Abnahme des Innenquerschnitts (QI) gebildet ist.

17. Rohrleitung (10) nach einem der Ansprüche 13 bis 16,
**dadurch gekennzeichnet,** dassdasAnschlussende(12)in axialer Nähe der Stirnfläche (18), d. h. im ersten Längenabschnitt (L1), eine umfangsgemäß verlaufende Nut (40) zur Aufnahme einer O-Ring-Dichtung (38) aufweist.

18. Rohrleitung (10) nach einem der Ansprüche 13 bis 17,
**dadurch gekennzeichnet, dass** eine innere Materialdifferenz (MI), die sich aus der Abweichung des Innenquerschnitts (QI) vom nominellen Innenquerschnitt (NQI) im dritten Längenabschnitt (L3) ergibt, und eine äußere Materialdifferenz (MA), die sich aus der Abweichung des Außenquerschnitts (QA) vom nominellen Außenquerschnitt (NQA) im ersten Längenabschnitt (L1) und im zweiten Längenabschnitt (L2) ergibt, gleich groß sind.

19. Rohrverschraubung mit einer in der Rohrverschraubung (1) verschraubten Rohrleitung (10) nach einem der Ansprüche 13 bis 18,
**dadurch gekennzeichnet, dass** die Rohrverschraubung (1) die Rohrleitung (10), ein Anschlussteil (2) und ein zum abgedichteten Halten der Rohrleitung (10) mit dem Anschlussteil (2) verschraubbares Überwurf-Verschraubungsteil (4) umfasst, wobei das Anschlussteil (2) eine Aufnahmeöffnung (14) mit einem sich in axialer Richtung (X-X) auf die Rohrleitung (10) hin nach außen erweiternden Innenkonus (16) aufweist, in dem das Anschlussendes (12) der Rohrleitung (10) aufgenommen ist.

20. Rohrverschraubung nach Anspruch 19,
**dadurch gekennzeichnet, dass** mittels des - von der Stirnfläche (18) aus gesehen - hinter dem zweiten Längenabschnitt (L2) angeordneten Ringteils (22, 42), insbesondere mittels eines Schneidrings (42), das Anschlussende (12) der Rohrleitung (10) formschlüssig und/oder kraftschlüssig zwischen dem Anschlussteil (2) und dem Verschraubungsteil (4) eingespannt ist.

21. Rohrverschraubung nach Anspruch 19 oder 20,
**dadurch gekennzeichnet, dass** sich in dem ersten Längenabschnitt (L1) der durch den Wandbereich des Anschlussendes (12) gebildete Außenquerschnitt (QA) der Rohrleitung (10) komplementär zu dem sich in Richtung auf die Rohrleitung (10) hin nach außen erweiternden Innenkonus (16) des Anschlussteils (2) aufweitet.

22. Rohrverschraubung
nach einem der Ansprüche 19 bis 21, **dadurch gekennzeichnet, dass** das Anschlussteil (2) in seiner Aufnahmeöffnung (14) eine radiale Stufenfläche (28) aufweist, wobei zwischen dem Innenkonus (16) und der radialen Stufenfläche (28) axial eine zylindrische innere Übergangsfläche (30) gebildet ist, die einen Innendurchmesser aufweist, der dem kleinsten Außendurchmesser des Anschlussendes (12) der Rohrleitung (10) entspricht.

23. Rohrverschraubung nach Anspruch 22,
**dadurch gekennzeichnet, dass** in einem Raum zwischen dem Innenkonus (16) und der radialen Stufenfläche (28) eine Dichtung (32) angeordnet ist.

## Claims

1. Method for the production of a pipe (10),
wherein the pipe (10) has a nominal outside cross section (NQA), a nominal inside cross section (NQI), a nominal wall thickness (NWS) and a connection end (12) with a wall region which is formed by deformation and is insertable into the receiving opening (14) of a connection part (2),
wherein a wall region of the connection end (12) is subjected to deformation and, when force is introduced in the axial direction (X-X) of the pipe (10) in a mould (F) of a tool (W1, W2), an outside contour of the connection end (12) is formed,
and therefore at the end of a first length portion (L1) of the connection end (12) that extends in the axial direction (X-X) from an end surface (18) of the pipe (10), an outside cross section (QA) of the pipe (10), which outside cross section is formed by the outside lateral area of the connection end (12), is greater than the nominal outside cross section (NQA), and, in a second length portion (L2) which adjoins the first length portion (L1) in the axial direction, the outside cross section (QA) decreases to the value of the nominal outside cross section (NQA),
wherein, as seen from the end surface (18), a ring part (22, 42) which surrounds the pipe (10) is arranged in the axial direction (X-X) behind the second length portion (L2) in a clamping region (BS) which, as seen from an end surface (18) of the connection end (12), lies in the axial direction behind the length regions (L1, L2) which form the outside contour in the wall region formed by deformation, which ring part has, on the side thereof facing away from the end surface (18), a contact surface (26) with a conical profile for a screwed joint part (4) which is screw-connectible to the pipe (10),
and in that the wall region of the connection end (12) is pressed by a force acting obliquely with respect to the axial direction (X-X) into the mould (F) of the tool (W1, W2) with radial expansion of the nominal inside cross section (NQI) of the pipe (10),
such that, starting from the end surface (18) facing the connection part (2), the clear inside cross section (QI) of the pipe (10) is larger than the nominal inside cross section (NQI) in a third length portion (L3) of the connection end (12) and decreases in the axial direction (X-X) until said clear inside cross section (QI) reaches the value of the nominal inside cross section (NQI), wherein, on the end surface (18), a wall thickness (WS) of the pipe (10) is smaller than the nominal wall thickness (NWS) and changes in the axial direction (X-X) reaching that value of the nominal wall thickness (NWS) which is present behind the connection end (12),
wherein the third length portion (L3) is at least the same size as the total of the first length portion (L1) and the second length portion (L2),
and wherein the pipe (10) is fixed in the axial direction (X-X) by means of the ring part (22, 42) during the deformation.

2. Method according to Claim 1,
**characterized in that** the mould (F) is formed by the interaction of a first tool part (W1) and a second tool part (W2).

3. Method according to either of Claims 1 and 2, **characterized in that** the connection end (12) is produced by cold forming.

4. Method according to one of Claims 1 to 3, **characterized in that**, during the deformation, the pipe (10) is fixed against axial displacement in relation to the first tool part (W1) in the clamping region (BS) which, as seen from an end surface (18) of the connection end (12), lies in the axial direction behind the length regions (L1, L2) which form the outer contour in the wall region formed by deformation.

5. Method according to Claim 4, **characterized in that**, during the deformation, the pipe (10) is fixed in the clamping region (BS) by means of a cutting ring (42) which remains in the screwed pipe joint (1).

6. Method according to Claim 4 or 5, **characterized in that**, in order to form the clamping region (BS), the clamping elements used are segments (S1, S2) of a tool part (W1), which segments surround an outside surface of the pipe (10) in a gap-free manner.

7. Method according to Claim 6, **characterized in that**, in the contact region of the pipe (10), the segments (S1, S2) have contour elements, a toothing (Z) or a roughened surface, which increase the holding forces on the pipe (10) during the deformation process.

8. Method according to one of Claims 2 to 7, **characterized in that** the radial expansion (20) is produced by means of the punch-like second tool part (W2) which, starting from an end surface (18) of the connection end (12), is moved axially into the connection end (12) of the pipe (10) and simultaneously pushes the material of the wall region to be deformed out of the original position thereof into the mould (F).

9. Method according to Claim 8, **characterized in that** the second tool part (W2) is designed so as to taper conically, wherein, in particular, a top angle (µ) of the conical taper lies within the range of 5° to 60°, preferably within the range of 20° to 40°.

10. Method according to one of Claims 2 to 9, **characterized in that** the first tool part (W1) is composed of a plurality of subsections (T1, T2), by means of the release of which from one another the deformed connection end (12) is ejected from the first tool part (W1).

11. Method according to one of Claims 2 to 10, **characterized in that** a circumferentially closed ring is used as the first tool part (W1) or at least as a subsection (T1) in the first tool part (W1).

12. Method according to one of Claims 2 to 11, **characterized in that**, during the deformation, the tool parts (W1, W2) used are such, the surface of which, with the exception of the clamping region (BS), bring about a reduction in friction during the deformation by means of mechanical treatment, such as polishing, or by means of the presence of a coating in the friction pairing with the pipe (10).

13. Pipe (10) produced in a method according to one of Claims 1 to 12, for producing a screwed pipe joint (1) which comprises the pipe (10), a connection part (2) and a screwed joint coupling part (4) which is screw-connectible to the connection part (2) for the sealed holding of the pipe (10),
wherein the connection part (2) has a receiving opening (14) with an internal cone (16), which expands outwards in the axial direction (X-X) toward the pipe (10), for receiving a connection end (12) of the pipe (10),
wherein the pipe (10) has a nominal outside cross section (NQA), a nominal inside cross section (NQI), a nominal wall thickness (NWS) and a connection end (12) with a wall region which is formed by deformation and is insertable into the receiving opening (14) of the connection part (2),
wherein at the end of a first length portion (L1) of the connection end (12) that extends in the axial direction (X-X) from an end surface (18) of the pipe (10), an outside cross section (QA) of the pipe (10), which outside cross section is formed by the outside lateral area of the connection end (12), is greater than the nominal outside cross section (NQA), and, in a second length portion (L2) which adjoins the first length portion (L1) in the axial direction, the outside cross section (QA) decreases to the value of the nominal outside cross section (NQA),
wherein the wall region of the connection end (12) of the pipe (10) is shaped, with radial expansion of the nominal inside cross section (NQI) thereof, by pressing into a mould (F) of a tool (W1, W2) when a force is introduced obliquely with respect to the axial direction (X-X),
such that, starting from the end surface (18) facing the connection part (2), the clear inside cross section (QI) of the pipe (10) is larger than the nominal inside cross section (NQI) in a third length portion (L3) of the connection end (12) and decreases in the axial direction (X-X) until said clear inside cross section (QI) reaches the value of the nominal inside cross section (NQI), present behind the connection end (12), and
on the end surface (18), a wall thickness (WS) of the pipe (10) is smaller than the nominal wall thickness (NWS) and changes in the axial direction (X-X) reaching that value of the nominal wall thickness (NWS) which is present behind the connection end (12),
wherein the third length portion (L3) is at least the same size as the total of the first length portion (L1) and the second length portion (L2), and
wherein, as seen from the end surface (18), a ring part (22, 42) which surrounds the pipe (10) is arranged in the axial direction (X-X) behind the second length portion (L2) in a clamping region (BS) which, as seen from an end surface (18) of the connection end (12), lies in the axial direction behind the length regions (L1, L2) which form the outside contour in the wall region formed by deformation,
by means of which ring part the connection end (12) of the pipe (10) can be clamped positively and/or non-positively between the connection part (2) and the screwed joint part (4),
wherein the ring part (22, 42) has, on the side thereof facing away from the end surface (18), a contact surface (26) with a conical profile for the screwed joint part (4).

14. Pipe (10) according to Claim 13, **characterized in that** a top angle (µ) of the conical taper of the clear inside cross section (QI) is within the range of 5° to 60°, preferably within the range of 20° to 40° or changes in this range in the third length portion (L3).

15. Pipe (10) according to Claim 13 or 14, **characterized in that** the connection end (12) is composed of a cold-deformed metal, in particular of cold-deformed steel or stainless steel.

16. Pipe (10) according to one of Claims 13 to 15, **characterized in that** the connection end (12), as seen in axial section, is designed in terms of the basic shape as an equilateral trapezoid, wherein the shorter of the two mutually parallel sides of the trapezoid forms the end surface (18) of the connection end (12) of the pipe (10) and a part of the longer of the two mutually parallel sides of the trapezoid forms a ring surface (21), which is oriented substantially perpendicularly to the longitudinal axis (X-X), around the pipe (10), wherein the increase in the outside cross section (QA) formed in the first length portion (L1) is formed by a limb (23) of the trapezoid, which limb tapers from the end surface (18) onto the ring surface (21) and is located radially on the outside, and the decrease in the inside cross section (QI) is formed by the other limb.

17. Pipe (10) according to one of Claims 13 to 16, **characterized in that**, in the axial vicinity of the end surface (18), i.e. in the first length portion (L1), the connection end (12) has a groove (40) running circumferentially for receiving an 0-ring seal (38).

18. Pipe (10) according to one of Claims 13 to 17, **characterized in that** an internal material difference (MI) arising from the deviation of the inside cross section (QI) from the nominal inside cross section (NQI) in the third length portion (L3) and an external material difference (MA) arising from the deviation of the outside cross section (QA) from the nominal outside cross section (NQA) in the first length portion (L1) and in the second length portion (L2) are equal in size.

19. Screwed pipe joint with a pipe (10) screw-connected in the screwed pipe joint (1) according to one of Claims 13 to 18, **characterized in that** the screwed pipe joint (1) comprises the pipe (10), a connection part (2) and a screwed joint coupling part (4) which is screw-connectible to the connection part (2) for the sealed holding of the pipe (10), wherein the connection part (2) has a receiving opening (14) with an internal cone (16) which expands outwards in the axial direction (X-X) towards the pipe (10) and in which the connection end (12) of the pipe (10) is accommodated.

20. Screwed pipe joint according to Claim 19, **characterized in that** the connection end (12) of the pipe (10) is clamped positively and/or non-positively between the connection part (2) and the screwed joint part (4) by means of the ring part (22, 42) arranged behind the second length portion (L2), as seen from the end surface (18), in particular by means of a cutting ring (42).

21. Screwed pipe joint according to Claim 19 or 20, **characterized in that** the outside cross section (QA) of the pipe (10), which outside cross section (QA) is formed by the wall region of the connection end (12), expands in the first length portion (L1) in a complementary manner to the internal cone (16) of the connection part (2), which cone expands outwards in the direction of the pipe (10).

22. Screwed pipe joint according to one of Claims 19 to 21, **characterized in that** the connection part (2) has a radial step surface (28) in the receiving opening (14) thereof, wherein a cylindrical inner transition surface (30) is formed axially between the internal cone (16) and the radial step surface (28), said transition surface (30) having an inside diameter which corresponds to the smallest outside diameter of the connection end (12) of the pipe (10).

23. Screwed pipe joint according to Claim 22, **characterized in that** a seal (32) is arranged in a space between the internal cone (16) and the radial step surface (28).

## Revendications

1. Procédé de fabrication d'un tuyau (10),
dans lequel le tuyau (10) présente une section transversale extérieure nominale (NQA), une section transversale intérieure nominale (NQI), une épaisseur de paroi nominale (NWS) et une extrémité de raccordement (12) avec une région de paroi formée par déformation, qui peut être introduit dans une ouverture de réception (14) d'une pièce de raccordement (2),
dans lequel une région de paroi de l'extrémité de raccordement (12) est soumise à une déformation et, par introduction de force en direction axiale (X-X) du tuyau (10), un contour extérieur de l'extrémité de raccordement (12) est réalisé dans une forme (F) d'un outil (W1, W2),
de telle manière qu'à l'extrémité d'un premier segment longitudinal (L1) de l'extrémité de raccordement (12), qui s'étend à partir d'une face frontale (18) du tuyau (10) en direction axiale (X-X), une section transversale extérieure (QA) du tuyau (10) formée par la surface latérale extérieure de l'extrémité de raccordement (12) soit plus grande que la section transversale extérieure nominale (NQA), et dans un deuxième segment longitudinal (L2), qui se raccorde au premier segment longitudinal (L1) en direction axiale, la section transversale extérieure (QA) diminue jusqu'à la valeur de la section transversale extérieure nominale (NQA),
dans lequel - vu depuis la face frontale (18) - en direction axiale (X-X) derrière le deuxième segment longitudinal (L2), dans une région de serrage (BS) qui - vue depuis une face frontale (18) de l'extrémité de raccordement (12) - se situe en direction axiale derrière les régions longitudinales (L1, L2), qui forment le contour extérieur dans la région de paroi formée par la déformation, est disposée une pièce annulaire (22, 42) entourant le tuyau (10), qui présente sur son côté situé à l'opposé de la face frontale (18) une face d'appui (26) s'étendant en forme conique pour une pièce de vissage (4) à visser avec le tuyau (10),
et que la région de paroi de l'extrémité de raccordement (12) est pressée, avec expansion radiale de la section transversale intérieure nominale (NQI) du tuyau (10), par une force agissant en oblique par rapport à la direction axiale (X-X) dans la forme (F) de l'outil (W1, W2),
de telle manière que, partant de la face frontale (18) tournée vers la pièce de raccordement (2), la section transversale intérieure libre (QI) du tuyau (10) dans un troisième segment longitudinal (L3) de l'extrémité de raccordement (12) soit plus grande que la section transversale intérieure nominale (NQI) et diminue en direction axiale (X-X), jusqu'à ce qu'elle atteigne la valeur de la section transversale intérieure nominale (NQI),
dans lequel, à la face frontale (18), une épaisseur de paroi (WS) du tuyau (10) est plus petite que l'épaisseur de paroi nominale (NWS) et varie en direction axiale (X-X) jusqu'à la valeur de l'épaisseur de paroi nominale (NWS), qui est présente derrière l'extrémité de raccordement (12),
dans lequel le troisième segment longitudinal (L3) est au moins exactement aussi grand que la somme du premier segment longitudinal (L1) et du deuxième segment longitudinal (L2),
et dans lequel le tuyau (10) est fixé en direction axiale (X-X) au moyen de la pièce annulaire (22, 42) pendant la déformation.

2. Procédé selon la revendication 1, **caractérisé en ce que** la forme (F) est formée par la coopération d'une première partie d'outil (W1) et d'une deuxième partie d'outil (W2).

3. Procédé selon une des revendications 1 ou 2, **caractérisé en ce que** l'extrémité de raccordement (12) est fabriquée par déformation à froid.

4. Procédé selon l'une quelconque des revendications 1 à 3, **caractérisé en ce que** le tuyau (10) est immobilisé lors de la déformation par rapport à la première partie d'outil (W1) contre un glissement axial dans la région de serrage (BS), qui - vue depuis une face frontale (18) de l'extrémité de raccordement (12) - est située en direction axiale derrière les régions longitudinales (L1, L2) qui forment le contour extérieur dans la région de paroi formée par déformation.

5. Procédé selon la revendication 4, **caractérisé en ce que** le tuyau (10) est immobilisé lors de la déformation dans la région de serrage (BS) au moyen d'une bague coupante (42), qui reste dans le raccord vissé (1).

6. Procédé selon la revendication 4 ou 5, **caractérisé en ce que**, pour la formation de la région de serrage (BS), on utilise comme segments de serrage des segments (S1, S2) d'une partie d'outil (W1), qui entourent sans jeu une surface extérieure du tuyau (10).

7. Procédé selon la revendication 6, **caractérisé en ce que** les segments (S1, S2) présentent dans la région de contact avec le tuyau (10) des éléments de contour, une denture (Z) ou une surface dépolie, qui augmentent les forces de maintien sur le tuyau (10) lors du processus de déformation.

8. Procédé selon l'une quelconque des revendications 2 à 7, **caractérisé en ce que** l'on produit l'expansion radiale (20) au moyen de la deuxième partie d'outil en forme de poinçon (W2) déplacée - en partant d'une face frontale (18) de l'extrémité de raccordement (12) - axialement dans l'extrémité de raccordement (12) du tuyau (10), qui refoule en même temps la matière de la région de paroi à déformer depuis sa position d'origine dans la forme (F).

9. Procédé selon la revendication 8, **caractérisé en ce que** la deuxième partie d'outil (W2) est réalisée sous forme conique décroissante, dans lequel en particulier un angle de pointe (µ) du cône décroissant se situe dans la plage de 5° à 60°, de préférence dans la plage de 20° à 40°.

10. Procédé selon l'une quelconque des revendications 2 à 9, **caractérisé en ce que** la première partie d'outil (W1) se compose de plusieurs pièces partielles (T1, T2), par la séparation desquelles l'une de l'autre on opère un démoulage de l'extrémité de raccordement déformée (12) hors de la première partie d'outil (W1).

11. Procédé selon l'une quelconque des revendications 2 à 10, **caractérisé en ce que** l'on utilise comme première partie d'outil (W1) ou au moins comme une pièce partielle (T1) dans la première partie d'outil (W1) une bague fermée selon la périphérie.

12. Procédé selon l'une quelconque des revendications 2 à 11, **caractérisé en ce que** l'on utilise comme parties d'outil (W1, W2), lors de la déformation, des pièces dont la surface - à l'exception de la région de serrage (BS) - assure lors de la déformation, par un traitement mécanique comme un polissage, ou par la présence d'un revêtement, une diminution du frottement dans le couple de frottement avec le tuyau (10).

13. Tuyau (10), fabriqué par un procédé selon l'une quelconque des revendications 1 à 12, pour la réalisation d'un raccord vissé (1), qui comprend le tuyau (10), une pièce de raccordement (2) et une pièce de vissage à chapeau (4) à visser pour le maintien étanche du tuyau (10) avec la pièce de raccordement (2),
dans lequel la pièce de raccordement (2) présente une ouverture de réception (14) avec un cône intérieur (16) s'évasant vers l'extérieur en direction axiale (X-X) sur le tuyau (10) pour la réception d'une extrémité de raccordement (12) du tuyau (10),
dans lequel le tuyau (10) présente une section transversale extérieure nominale (NQA), une section transversale intérieure nominale (NQI), une épaisseur de paroi nominale (NWS) ainsi qu'une extrémité de raccordement (12) avec une région de paroi formée par déformation, qui peut être insérée dans l'ouverture de réception (14) de la pièce de raccordement (2),
dans lequel, à l'extrémité d'un premier segment longitudinal (L1) de l'extrémité de raccordement (12), qui s'étend depuis une face frontale (18) du tuyau (10) en direction axiale (X-X), une section transversale extérieure (QA) du tuyau (10) formée par la surface latérale extérieure de l'extrémité de raccordement (12) est plus grande que la section transversale extérieure nominale (NQA),
et, dans un deuxième segment longitudinal (L2), qui se raccorde au premier segment longitudinal (L1) en direction axiale, la section transversale extérieure (QA) diminue jusqu'à la valeur de la section transversale extérieure nominale (NQA),
dans lequel la région de paroi de l'extrémité de raccordement (12) du tuyau (10) est formée par pressage dans une forme (F) d'un outil (W1, W2) lors d'une introduction de force en oblique par rapport à la direction axiale (X-X) avec expansion radiale de sa section transversale intérieure nominale (NQI),
de telle manière que, partant de la face frontale (18) tournée vers la pièce de raccordement (2), la section transversale intérieure libre (QI) du tuyau (10) dans un troisième segment longitudinal (L3) de l'extrémité de raccordement (12) soit plus grande que la section transversale intérieure nominale (NQI) et diminue en direction axiale (X-X), jusqu'à ce qu'elle atteigne la valeur de la section transversale intérieure nominale (NQI), qui est présente derrière l'extrémité de raccordement (12), et
à la face frontale (18), une épaisseur de paroi (WS) du tuyau (10) est plus petite que l'épaisseur de paroi nominale (NWS) et varie en direction axiale (X-X) jusqu'à la valeur de l'épaisseur de paroi nominale (NWS), qui est présente derrière l'extrémité de raccordement (12),
dans lequel le troisième segment longitudinal (L3) est au moins exactement aussi grand que la somme du premier segment longitudinal (L1) et du deuxième segment longitudinal (L2), et
dans lequel - vu de la face frontale (18) - une pièce annulaire (22, 42) entourant le tuyau (10) est disposée en direction axiale (X-X) derrière le deuxième segment longitudinal (L2) dans une région de serrage (BS), qui - vue depuis une face frontale (18) de l'extrémité de raccordement (12) - est placée en direction axiale derrière les régions longitudinales (L1, L2), qui forment le contour extérieur dans la région de paroi formée par déformation,
au moyen de laquelle l'extrémité de raccordement (12) du tuyau (10) peut être serrée par emboîtement et/ou par adhérence entre la pièce de raccordement (2) et la pièce de vissage (4),
dans lequel la pièce annulaire (22, 42) présente sur son côté situé à l'opposé de la face frontale (18) une surface d'appui (26) de forme conique pour la pièce de vissage (4).

14. Tuyau (10) selon la revendication 13, **caractérisé en ce qu'**un angle de pointe (µ) du cône décroissant de la section transversale intérieure libre (QI) se situe dans la plage de 5° à 60°, de préférence dans la plage de 20° à 40°, ou varie dans cette plage dans le troisième segment longitudinal (L3).

15. Tuyau (10) selon la revendication 13 ou 14, **caractérisé en ce que** l'extrémité de raccordement (12) se compose d'un métal déformé à froid, en particulier d'acier ou d'acier spécial déformé à froid.

16. Tuyau (10) selon l'une quelconque des revendications 13 à 15, **caractérisé en ce que** l'extrémité de raccordement (12) vue en coupe axiale est configurée à partir de la forme de base en un trapèze isocèle, dans lequel le plus court des deux côtés parallèles l'un à l'autre du trapèze forme la face frontale (18) de l'extrémité de raccordement (12) du tuyau (10) et une partie du plus long des deux côtés parallèles l'un à l'autre du trapèze forme une face annulaire (21) orientée de façon essentiellement perpendiculaire à l'axe longitudinal (X-X) autour du tuyau (10), dans lequel l'augmentation de la section transversale extérieure (QA) réalisée dans le premier segment longitudinal (L1) est formée par une branche (23) du trapèze située radialement à l'extérieur allant de la face frontale (18) à la surface annulaire (21) et la diminution de la section transversale intérieure (QI) est formée par l'autre branche.

17. Tuyau (10) selon l'une quelconque des revendications 13 à 16, **caractérisé en ce que** l'extrémité de raccordement (12) présente, à proximité immédiate de la face frontale (18), c'est-à-dire dans le premier segment longitudinal (L1), une rainure (40) s'étendant selon la périphérie pour la réception d'un joint torique (38).

18. Tuyau (10) selon l'une quelconque des revendications 13 à 17, **caractérisé en ce qu'**une différence de matière intérieure (MI), qui résulte de l'écart de la section transversale intérieure (QI) par rapport à la section transversale intérieure nominale (NQI) dans le troisième segment longitudinal (L3), et une différence de matière extérieure (MA), qui résulte de l'écart de la section transversale extérieure (QA) par rapport à la section transversale extérieure nominale (NQA) dans le premier segment longitudinal (L1) et dans le deuxième segment longitudinal (L2), sont de même valeur.

19. Raccord vissé avec un tuyau (10) selon l'une quelconque des revendications 13 à 18 vissé dans le raccord vissé (1), **caractérisé en ce que** le raccord vissé (1) comprend le tuyau (10), une pièce de raccordement (2) et une pièce de vissage à chapeau (4) à visser pour le maintien étanche du tuyau (10) avec la pièce de raccordement (2), dans lequel la pièce de raccordement (2) présente une ouverture de réception (14) avec un cône intérieur (16) s'évasant vers l'extérieur en direction axiale (X-X) sur le tuyau (10), dans lequel l'extrémité de raccordement (12) du tuyau (10) est logée.

20. Raccord vissé selon la revendication 19, **caractérisé en ce que**, au moyen de la pièce annulaire (22, 42), en particulier au moyen d'une bague coupante (42), disposée - vue depuis la face frontale (18)-derrière le deuxième segment longitudinal (L2), l'extrémité de raccordement (12) du tuyau (10) est serrée par emboîtement et/ou par adhérence entre la pièce de raccordement (2) et la pièce de vissage (4).

21. Raccord vissé selon la revendication 19 ou 20, **caractérisé en ce que** la section transversale extérieure (QA) du tuyau (10) formée par la région de paroi de l'extrémité de raccordement (2) s'évase dans le premier segment longitudinal (L1) de façon complémentaire au cône intérieur (16) de la pièce de raccordement (2) s'évasant vers l'extérieur en direction du tuyau (10).

22. Raccord vissé selon l'une quelconque des revendications 19 à 21, **caractérisé en ce que** la pièce de raccordement (2) présente une surface étagée radiale (28) dans son ouverture de réception (14), dans lequel une surface de transition intérieure cylindrique (30) est formée axialement entre le cône intérieur (16) et la surface étagée radiale (28), qui présente un diamètre intérieur, qui correspond au plus petit diamètre extérieur de l'extrémité de raccordement (12) du tuyau (10).

23. Raccord vissé selon la revendication 22, **caractérisé en ce qu'**un joint d'étanchéité (32) est disposé dans un espace entre le cône intérieur (16) et la surface étagée radiale (28).
